(19) **Europäisches Patentamt**
**European Patent Office**
**Office européen des brevets**

(11) **EP 1 884 797 B1**

(12) **EUROPÄISCHE PATENTSCHRIFT**

(45) Veröffentlichungstag und Bekanntmachung des Hinweises auf die Patenterteilung:
**11.10.2017 Patentblatt 2017/41**

(51) Int Cl.:
***G01S 7/487*** *(2006.01)*     ***G01S 17/89*** *(2006.01)*

(21) Anmeldenummer: **07090113.7**

(22) Anmeldetag: **13.06.2007**

(54) **Vorrichtung und Verfahren zur Abstandsbestimmung**

Device and method for determining distance

Dispositif et procédé destinés à la détermination de distance

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **14.06.2006 DE 102006029025**

(43) Veröffentlichungstag der Anmeldung:
**06.02.2008 Patentblatt 2008/06**

(73) Patentinhaber: **Iris-Gmbh Infrared & Intelligent Sensors**
**12459 Berlin (DE)**

(72) Erfinder:
• **Thun, Andreas**
**12555 Berlin (DE)**

• **Wagner, Wilfried**
**12683 Berlin (DE)**

(74) Vertreter: **Eisenführ Speiser**
**Patentanwälte Rechtsanwälte PartGmbB**
**Anna-Louisa-Karsch-Strasse 2**
**10178 Berlin (DE)**

(56) Entgegenhaltungen:
**EP-B1- 1 118 208     DE-A1- 10 051 505**
**DE-A1- 10 153 742     DE-A1- 10 253 437**

• **RYOHEI MIYAGAWA ET AL: "CCD-Based Range-Finding Sensor" IEEE TRANSACTIONS ON ELECTRON DEVICES, IEEE SERVICE CENTER, PISACATAWAY, NJ, US, Bd. 44, Nr. 10, Oktober 1997 (1997-10), XP011016274 ISSN: 0018-9383**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung und ein Verfahren zur Abstandsbestimmung. Vorrichtungen und Verfahren zur Abstandsbestimmung im Sinne der vorliegenden Erfindung beruhen auf dem Prinzip, einen Lichtimpuls auszusenden und die zwischen dem Beginn des Aussendens des Lichtimpulses und dem Eintreffen der von einem Objekt reflektierten Anteile des Lichtimpulses liegende Laufzeit zu messen. Der Abstand zu einem reflektierenden Objekt ergibt sich dabei als Produkt der halben gemessenen Laufzeit und der Lichtgeschwindigkeit.

Im Stand der Technik bekannte Vorrichtungen zur Abstandsbestimmung verfügen über eine Sendeeinheit zum Aussenden eines Lichtimpulses, eine Empfängermatrix mit wenigstens einem photoelektrischen Element sowie eine Kontrolleinheit, die mit der Sendeeinheit und der Empfängermatrix verbunden ist und diese steuert. Die Sendeeinheit ist ausgebildet, bei Anliegen eines Aktivierungssignals an einem ersten Steuereingang der Sendeeinheit einen Lichtimpuls auszusenden, wobei das Licht des Lichtimpulses dem sichtbaren Spektrum oder anderen Spektralbereichen der elektromagnetischen Strahlung entstammen kann. So ist beispielsweise unsichtbares Licht im infraroten Frequenzbereich für die Verwendung in einer Vorrichtung zur Abstandsbestimmung geeignet.

Die Empfängermatrix weist einen Messausgang auf, der ein Ausgangssignal liefert. Das Ausgangssignal wird aus einem Messsignal abgeleitet, das von dem wenigstens einen photoelektrischen Element der Empfängermatrix in Abhängigkeit von auf dieses einfallendem Licht erzeugt wird. Vorteilhafterweise werden Sendeeinheit und Empfängermatrix so gewählt, dass das photoelektrische Element der Empfängermatrix besonders stark auf Licht der Wellenlänge des von der Sendeeinheit ausgesendeten Lichtimpulses reagiert, so dass das von der Empfängermatrix ausgegebene Ausgangssignal eine besonders starke Abhängigkeit von der Intensität von empfangenem Licht mit dieser Wellenlänge besitzt.

Aus WO 99/34235 sind ein Verfahren und eine Vorrichtung zur Aufnahme eines dreidimensionalen Abstandsbildes bekannt, die nach dem geschilderten Grundprinzip der sogenannten Time-of-flight-Methode funktionieren. Dabei wird ein Lichtimpuls einer bestimmten Dauer ausgesendet und gleichzeitig damit begonnen, über die bestimmte Dauer des Aussendens des Lichtimpulses den Photostrom eines photoelektrischen Elementes aufzuintegrieren. Mit dem Ende des Aussendens des Lichtimpulses wird gleichzeitig auch die Integration des Photostroms beendet. Da von dem Zeitpunkt an, von dem reflektierte Anteile des ausgesendeten Lichtimpulses das photoelektrische Element erreichen, dieses einen wesentlich höheren Photostrom ausgibt und dieser Photostrom bis zum Ende des Aussendens des Lichtimpulses aufintegriert wird, gibt der Integratorstand am Ende der Messperiode Auskunft darüber, mit welcher Verzögerung (d.h. nach welcher Laufzeit) der reflektierte Lichtimpuls auf das photoelektrische Element gelangt ist und damit darüber, wie groß der Abstand zu dem reflektierenden Objekt ist.

Es trägt nämlich immer nur ein erster Abschnitt des empfangenen, reflektierten Anteils des ausgesendeten Lichtimpulses zum Integratorstand bei, da die Integrationszeit endet, bevor der reflektierte Lichtimpuls vollständig auf das photoelektrische Element eingefallen ist. Der vom photoelektrischen Element erfasste und integrierte erste Abschnitt des empfangenen, reflektierten Anteils des ausgesendeten Lichtimpulses ist dabei umso größer, je kürzer der Anstand zwischen Objekt und photoelektrischem Element ist. Die Abstandsmessung nach der Time-of-flight-Methode beruht somit wesentlich darauf, dass nur ein Teilabschnitt des empfangenen, reflektierten Anteils des ausgesendeten Lichtimpulses aufintegriert wird.

Zur Verbesserung der Messgenauigkeit wird in der genannten Quelle vorgeschlagen, zusätzlich eine Messung des Dunkelstromes und des Umgebungslichtes (Background) durchzuführen, wobei kein Lichtimpuls ausgesendet wird und das Integrationsergebnis somit allein den durch das Umgebungslicht verursachten Anteil des Photostrom über die Messperiode wiedergibt. Um das Messergebnis zusätzlich auch noch unabhängig von dem Reflexionskoeffizienten des reflektierenden Objektes zu machen, werden zwei Messungen mit unterschiedliche langen Integrationszeiten durchgeführt und die jeweiligen Messergebnisse durch Subtraktion und Quotientenbildung normiert.

Alle bekannten Verfahren zur Abstandsbestimmung durch Messen der Laufzeit eines Lichtimpulses weisen den Nachteil auf, dass die Intensität der reflektierten Anteile des ausgesendeten Lichtimpulses quadratisch mit dem Abstand zu dem reflektierenden Objekt abnimmt. Dadurch verschlechtert sich der Signalrauschabstand der Abstandsbestimmung mit zunehmender Distanz zu dem reflektierenden Objekt. Ein weiterer Nachteil der bekannten Verfahren zur Abstandsbestimmung besteht darin, dass für die Abstandsbestimmung prinzipiell nur ein Teil des reflektierten Lichtimpulses integriert wird, wobei die Größe des integrierten Anteiles abhängig von der Laufzeit des Lichtimpulses ist. Dadurch verschlechtert sich der Signalrauschabstand für die Messung zusätzlich, weil ein geringeres aufintegriertes Nutzsignal einem konstanten Rauschsignal gegenüber steht.

Aus Ryohei Miyagawa et al: "CCD-Based Range-Finding Sensor"; IEEE TRANS-ACTIONS ON ELECTRON DEVICES, VOL. 44, NO. 10, OCTOBER 1997 (1997-10); XP011016274; ISSN: 0018-9383, ist weiter ein CCD-basierender Abstandssensor bekannt, der durch Verwendung der Laufzeitmethode (engl.: Time-Of-Flight Method) den Abstand zu einem Objekt bestimmt. Für die Integration des reflektierten Lichts werden Messströme von zwei Photodetektoren (in der Publikation wird der Wortlaut "charge packets" verwendet) erfasst. Bei abgedunkelter Messumgebung detektiert der Sensor auf eine Distanz zum Objekt von etwa 150 cm Distanzänderungen von 10 cm. Es ist allgemein bekannt, dass die Photodetektoren einen erheblichen Anteil des Gesamtvolumens eines Abstandssensors ausmachen.

Aus der Offenlegungsschrift DE 102 53 437 A1 derselben Anmelderin ist eine Vorrichtung zum Erfassen einer Topografie in drei Dimensionen bekannt. Hier beginnt eine einmalige Integration des Photostroms eines Photoelements nach Verstreichen eines Verzögerungsintervalls nach dem Aussenden eines Lichtimpulses. Das Verzögerungsintervall ist gerade so lang, dass die Integration nach dem Eintreffen des ersten von der zu vermessenden Topografie zurückreflektierten Sendeimpulses liegt.

Die Erfindung löst die Mängel des Standes der Technik durch eine Vorrichtung nach Anspruch 1.

Zur Bestimmung eines Abstandswertes löst die Kontrolleinheit zunächst einen Lichtimpuls vorgegebener Impulsdauer aus und startet mit unterschiedlicher Zeitverzögerung den ersten und den zweiten Integrator. Der Zeitverlauf zwischen dem Sendestartsignal und dem Integratorsteuersignal zum Start der ersten Integrationszeit wird im Folgenden auch als Wartezeitspanne bezeichnet. Über ihre jeweilige Integrationszeit integrieren die Integratoren das Messsignal und bilden so zwei möglicherweise identische, in der Regel jedoch unterschiedliche Integratorstände. Die Integratorstände hängen von der Laufzeit des reflektierten Lichtimpulses sowie der jeweiligen Zeitverzögerung für den Start der Integratoren und der jeweiligen Integrationszeit ab. Die Kontrolleinheit bildet das Abstandssignal jeweils direkt - und somit abweichend gegenüber der z.B: aus DE 101 53 742 bekannten Lehre - aus den beiden Integratorständen.

Das Integratorsteuersignal kann beispielsweise ein Integratorstartsignal oder ein Integratorstopsignal sein, mit dem der jeweilige Integrator gestartet bzw. gestoppt wird. Zwischen dem Intergratorstartsignal und dem Integratorstopsignal für einen Integrator verstreicht dann die jeweilige Integrationszeit. Das Integratorsteuersignal kann auch ein Integratoreinschaltsignal sein, für dessen Dauer der jeweilige Integrator eingeschaltet (aktiviert) ist, so dass die Dauer des jeweiligen Integratoreinschaltsignals der jeweiligen Integrationszeit entspricht.

Die Erfindung besitzt den Vorteil, dass für das Erfassen eines reflektierten Lichtimpulses zwei unabhängig voneinander ansteuerbare Integratoren vorgesehen sind, so dass die Integratoren insbesondere zeitlich nacheinander gestartet werden können, wodurch insgesamt ein größerer Anteil des reflektierten Lichtimpulses in die kumulierte Integrationszeit beider Integratoren fällt. Für die Entfernungsmessung ist es wesentlich, dass jeder Integrator eine Integrationszeit aufweist, die maximal der Impulsdauer des Lichtimpulses entspricht, so dass mit einem Integrator notwendigerweise nur ein vorderer oder ein hinterer Teil des reflektierten Lichtimpulses erfasst werden kann, um eine Entfernungsinformation zu erhalten. Entsprechend kann mit einem Integrator nur ein Teil der Energie des reflektierten Lichtimpulses erfasst werden. Zwei Integratoren mit unterschiedlichen Integrationszeiten, die beide jeweils maximal die Impulsdauer des reflektierten Lichtimpulses (der durch Phasenverzögerungen infolge von Dispersion verschmiert und daher länger sein kann, als der ausgesendete Lichtimpuls) aufweisen, können zusammengenommen die gesamte Energie des reflektierten Lichtimpulses erfassen. Bei einer kurzen Entfernung und entsprechend kurzer Laufzeit des reflektierten Lichtimpulses erfasst der zuerst gestartete Integrator einen größeren Teil der Energie, während bei längerer Laufzeit des Lichtimpulses der später gestartete und später die Integration beendende Integrator einen größeren Teil der Energie des reflektierten Lichtimpulses erfasst. Dies erhöht die Genauigkeit der Abstandsmessung im doppelten Sinne: Messfehler mitteln sich aus und die potentiell sehr geringe Anzahl erfasster Photonen wird optimal genutzt.

Vorzugsweise sind die Integrationszeiten beider Integratoren gleich lang und entsprechen in einer besonders bevorzugten Ausführungsvariante der Impulsdauer des ausgesendeten Lichtimpulses. Ebenso ist es bevorzugt, wenn die Integrationszeit des zweiten Integrators zu dem Zeitpunkt gestartet wird, zu dem die Integrationszeit des ersten Integrators endet. In einer bevorzugten Ausführungsvariante beginnt die Integrationszeit des ersten Integrators gleichzeitig mit dem Aussenden des Lichtimpulses und entspricht der Impulsdauer des Lichtimpulses der Laufzeit des Lichtimpulses bis zum weitesten zu erfassenden Objekt. In diesem Fall ist die Wartezeitdauer gleich Null.

Neben der bevorzugten Variante, der gemäß die beiden Integrationszeiten unmittelbar aneinander anschließen, ist es auch möglich, dass sich die Integrationszeiten der beiden Integratoren überlappen oder dass eine Lücke zwischen beiden Integrationszeiten besteht. Solange der Zeitraum des Überlappens oder die Dauer der Lücke bekannt ist, ist in beiden Fällen eine Entfernungsmessung im Sinne der Erfindung möglich.

Ein Integrator kennt wenigstens zwei Betriebszustände, die durch das Integratorsteuersignal angewählt werden können. Im ersten Betriebszustand integriert der Integrator das an seinem Eingang anliegende Eingangssignal über die Zeit (die Integrationszeit) auf, in dem anderen Betriebszustand speichert er den durch Integrieren des Eingangssignals gebildeten Integratorstand. Zudem kann der Integratorstand des Integrators durch ein entsprechendes Integratorsteuersignal zurückgesetzt oder ausgegeben werden.

Die Integratoren können beispielsweise Kondensatoren sein, die für die Dauer der jeweiligen Integrationszeit mit dem photoelektrischen Element verbunden sind. Außerhalb der jeweiligen Integrationszeit kann die Ladung des jeweiligen Kondensators auf einen einem jeweiligen Kondensator zugeordneten Akkumulator übertragen werden, in dem die Ladungen des jeweiligen Kondensators über mehrere Messzyklen aufsummiert werden, um auf diese bevorzugte Weise eine höherer Messgenauigkeit durch eine Entfernungsmessung über mehrere Messzyklen zu ermöglichen. Auch der Akkumulator kann ein Kondensator sein, der eine größere Kapazität haben kann, als der jeweilige als Integrator dienende Kondensator. Um zwei Integratoren zu verwirklichen, sind zwei Akkumulatoren erforderlich, die im Ergebnis ebenfalls jeweils als Integrator im Sinne der Erfindung wirken. Es ist sogar möglich, zwei Akkumulatoren über einen einzigen Kondensator mit einem Photoelement zu verbinden, falls sich die Integrationszeiten nicht überlappen, so dass der einzige Kondensator nach Ende der ersten Integrationszeit seine Ladung auf den ersten Akkumulator überträgt und anschließend, nach Ende der zweiten Integrationszeit seine Ladung auf den zweiten Akkumulator.

Indem erfindungsgemäß zwei Integratoren vorgesehen sind, wird ein fortlaufendes Integrieren des von dem photoelektrischen Element ausgegebenen Messsignals durch den einen der beiden Integratoren möglich, während der andere Integrator gerade im Betriebszustand des Speicherns ist. Dadurch ist die erfindungsgemäße Vorrichtung auch Grundlage von neuen und vorteilhaften Verfahren zur Abstandsbestimmung, die den zweiten Aspekt der Erfindung bilden.

Vorteilhafte Varianten der erfindungsgemäßen Vorrichtung sind Gegenstand der Unteransprüche und werden im Folgenden erläutert.

Bei einer Ausführungsvariante der Erfindung ist das photoelektrische Element rechteckig, insbesondere quadratisch, und weist eine Seitenlänge zwischen 100 $\mu$m und 300 $\mu$m, insbesondere 200 $\mu$m auf. Ein photoelektrisches Element mit einer so großen Seitenlänge besitzt wegen der großen Fläche eine besonders große Sensibilität gegenüber einfallendem Licht und erzeugt somit einen besonders großen Photostrom, der eine Abstandsbestimmung mit einem verbesserten Signalrauschabstand und damit mit einem verringerten Messfehler bedingt.

Besonders bevorzugt weist die Empfängermatrix eine Vielzahl von photoelektrischen Elementen und für jedes photoelektrische Element einen ersten und einen zweiten Integrator auf, wobei die photoelektrischen Elemente in einem zweidimensionalen Feld angeordnet sind. Alle Ausführungsvarianten mit einer solchen Empfängermatrix mit einer Vielzahl von photoelektrischen Elementen besitzen den Vorteil, dass nicht nur ein einzelner Abstandswert, sondern ein zweidimensionales Feld von Abstandswerten, das eine dreidimensionale Abbildung eines oder mehrerer reflektierender Objekte darstellt, erzeugt wird. Um die Ansteuerung der einzelnen photoelektrischen Elemente zu vereinfachen, wird dabei bevorzugt das am zweiten Steuereingang anliegende Integratorsteuersignal an alle ersten oder zweiten Integratoren gleichzeitig gegeben, so dass die einzelnen Integratoren für das Steuern der Betriebszustände des Integrierens und des Speicherns nicht individuell angewählt zu werden brauchen, sondern in zwei voneinander vorzugsweise unabhängigen Gruppen angesteuert werden. Im Zusammenhang mit dieser Ausführungsvariante ist es besonders vorteilhaft, wenn die photoelektrischen Elemente jeweils mit einem Kondensator relativ kleiner Kapazität verbunden sind, der durch entsprechende Integratorsteuersignale abwechselnd nach Ende einer jeweiligen ersten und zweiten Integra-tionszeit mit einem ersten und zweiten Kondensator größerer Kapazität als Akkumulator und jeweiliger erster und zweiter Integrator verbunden wird, um die jeweilige, während einer ersten Integrationszeit gesammelte Ladung auf den ersten Akkumulator und die während einer zweiten Integrationszeit gesammelte Ladung auf den zweiten Akkumulator zu übertragen.

Die erfindungsgemäße Vorrichtung kann über eine Optik verfügen, die vor der Empfängermatrix angeordnet und ausgebildet ist, Licht der von der Sendeeinheit ausgesandten Art auf die Empfängermatrix zu projizieren. Eine solche Optik bietet z. B. den Vorteil, dass von einem Objekt reflektiertes Licht gesammelt und fokussiert als möglichst scharfes Abbild auf eine gegenüber dem Durchmesser der Optik kleinere Empfängermatrix projiziert werden kann, so dass die Intensität des auf ein einzelnes photoelektrisches Element einfallenden Lichts gesteigert wird.

Gemäß einer bevorzugten Ausführungsvariante der erfindungsgemäßen Vorrichtung ist die Sendeeinheit ausgebildet, Infrarotlicht auszusenden. Infrarotlicht bietet die Vorteile, dass es für den Menschen unsichtbar ist, so dass diese Erfindungsvariante einsetzbar ist, ohne Menschen aufgrund der ausgesandten Lichtimpulse zu stören, und von herkömmlichen Optiken und Empfängermatrizen problemlos gehandhabt werden kann.

Die Sendeeinheit ist vorzugsweise ausgebildet, Lichtimpulse unterschiedlicher Intensität abzugeben, wobei die Intensität durch das am ersten Steuereingang anliegende Sendestartsignal vorgebbar ist. Diese Ausführungsvariante der Erfindung ermöglicht es, eine an die jeweiligen Bedingungen angepasste Abstandsbestimmung durchzuführen, so dass zum Beispiel in einer Umgebung mit verhältnismäßig viel Hintergrundlicht Lichtimpulse größerer Intensität verwendet werden können als in Umgebungen mit wenig oder keinem Hintergrundlicht.

Bei allen Ausführungsvarianten der Vorrichtung zur Abstandsbestimmung kann die Kontrolleinheit über einen Zeitgeber verfügen, der ausgebildet ist, der Kontrolleinheit das Verstreichen einer von der Kontrolleinheit vorgegebenen Zeitspanne anzuzeigen. Das Vorsehen eines Zeitgebers ermöglicht es, auch komplexere Messabläufe zur Abstandsbestimmung durchzuführen.

Bei einer besonders bevorzugten Ausführungsvariante mit Zeitgeber ist die Kontrolleinheit ausgebildet, einen Messzyklus mit einer durch eine erste Aktivitätszeitspanne vorgegebenen Integrationszeit durchzuführen und dabei durch Abgabe jeweiliger Integratorsteuersignale zuerst den ersten Integrator zu aktivieren und nach einem ersten Verstreichen der ersten Aktivitätszeitspanne den ersten Integrator zu deaktivieren und den zweiten Integrator zu aktivieren. Die sequenzielle Aktivierung des ersten und des zweiten Integrators bildet die Grundlage einer Vielzahl von Ausführungsvarianten der erfindungsgemäßen Vorrichtung, die die Durchführung von fehlerreduzierten Messungen zur Abstandsbestimmung ermöglichen.

In Bezug auf die letztgenannte Ausführungsvariante ist die Kontrolleinheit vorzugsweise ausgebildet, während der Durchführung eines Messzyklus' den zweiten Integrator nach einem zweiten, vom Zeitpunkt des ersten Verstreichens der ersten Aktivitätszeitspanne gemessenen Verstreichen der ersten Aktivitätszeitspanne zu deaktivieren. Beide Integrationszeiten folgen somit unmittelbar aufeinander, sind gleich lang und entsprechen hinsichtlich ihrer Dauer der ersten Aktivitätszeitspanne. Auch die Impulsdauer des Lichtimpulses kann der Dauer der ersten Aktivitätszeitspanne und damit den beiden Integrationszeiten entsprechen. Die von dem Zeitgeber vorgegebene erste Aktivitätszeitspanne kann somit sowohl die Impulsdauer des Lichtimpulses als auch die beiden Integrationszeiten hinsichtlich ihrer Dauer bestimmen.

In einer auch unabhängig hiervon bevorzugten Ausführungsvariante kann die Kontrolleinheit ausgebildet sein, die Sendeeinheit für die Dauer des ersten Verstreichens der ersten Aktivitätszeitspanne zu aktivieren, d.h. der Lichtimpuls wird während der gesamten Integrationszeit des zuerst gestarteten Integrators ausgesendet.

In diesem Sinne ist es vorteilhaft, wenn die Kontrolleinheit ausgebildet ist, während der Durchführung eines Messzyklus' die Sendeeinheit und den ersten Integrator durch Abgabe eines Sendestartsignals und eines Integratorstartsignals gleichzeitig zu aktivieren. Indem die Sendeeinheit somit nicht früher als der erste Integrator aktiviert wird, sondern der Beginn des Aussenden des Lichtimpulses mit dem Beginn der ersten Integrationszeit übereinstimmt, wird bei der Durchführung eines Messzyklus' vermieden, dass bei Aktivierung des ersten Integrators der von der Sendeeinheit ausgesendete Lichtimpuls bereits eine Strecke zurückgelegt hat und möglicherweise ein erster Teil des reflektierten Lichtimpulses von ersten Integrator nicht erfasst wird. Aus dem sich ergebenden Integratorstand des ersten Integrators ist dann nicht abzulesen, ob es ein vorderer Teil des Lichtimpulses oder ein hinterer Teil des Lichtimpulses ist, der vom ersten Integrator nicht erfasst wurde. Dadurch wird die Bestimmung eines Abstandes zu einem Objekt, das sich in einem geringeren Abstand als diese Strecke befindet, unmöglich.

Besonders bevorzugt ist die Kontrolleinheit ausgebildet, eine Vielzahl von Messzyklen durchzuführen, wobei der erste Integrator und der zweite Integrator ausgebildet sind, ihren jeweiligen Integratorstand zwischen den Messzyklen zu speichern und somit das Messsignal über die Vielzahl von Messzyklen zu integrieren, und dass die Kontrolleinheit ausgebildet ist, das jeweilige vom ersten Integrator und vom zweiten Integrator ausgegebene Ausgangssignal nach dem Durchführen der Vielzahl von Messzyklen entgegenzunehmen und auszuwerten. Während eines jeweiligen Messzyklus' erfolgt jeweils eine Integration des in Abhängigkeit von auf das jeweilige photoelektrische Element einfallenden Lichts erzeugten Messsignals und die Integratorstände zum Ende der jeweiligen Integrationszeit werden über mehrere Messzyklen akkumuliert, d.h. aufsummiert. Da die maximale Intensität des ausgesandten Lichtimpulses aus verschiedenen Gründen begrenzt ist, erlaubt diese Ausführung der Erfindung das Akkumulieren der jeweiligen Integratorstände über eine Vielzahl von Messzyklen, wodurch im Ergebnis die Abstandsbestimmung mit einem reduzierten Messfehler durchgeführt werden kann.

Bevorzugt dauert die erste Aktivitätszeitspanne zwischen 10 und 100 ns, insbesondere 20 ns. Eine derart bemessene erste Aktivitätszeitspanne ist für Messungen bis zu einem Abstand von einigen Metern geeignet. 20 ns sind geeignet für eine Abstandsmessung bis zu 3 m.

Bei einer Ausführungsvariante der erfindungsgemäßen Vorrichtung kann die Kontrolleinheit über einen A/D-Umsetzer verfügen, der ausgebildet ist, ein von der Empfängermatrix entgegengenommenes Ausgangssignal in eine digitale Repräsentation umzusetzen und als Ergebniswert auszugeben. Das Umsetzen des Ausgangssignals in eine digitale Repräsentation bietet den Vorteil, die anschließende Auswertung des Ausgangssignals digital und damit abgesehen von den Quantisierungsfehlern bei der A/D-Umsetzung verlustfrei durchzuführen. Dabei kann jeweils ein A/D-Umsetzer pro photoelektrischem Element vorgesehen sein, durch welche das Messsignal sofort in ein digitales Signal umgesetzt wird, so dass Integration und Akkumulieren ohne Kondensatoren auf digitalem Wege erfolgen kann. Im Falle von durch Kondensatoren gebildeten Integratoren ist einem jeweiligen, einen Integrator bildenden Kondensator ein eigener A/D-Umsetzer zugeordnet, so dass jedem photoelektrischem Element zwei A/D-Umsetzer zugeordnet sind.

Eine Weiterführung dieser Ausführungsvariante der Erfindung verfügt deshalb über eine Kontrolleinheit mit einer arithmetischen Logikeinheit, die mit dem A/D-Umsetzer verbunden und ausgebildet ist, einen vom A/D-Umsetzer umgesetzten, vom ersten Integrator oder einem zugehörigen Akkumulator ausgegebenen ersten, vorzugsweise akkumulierten Ergebniswert und einen vom A/D-Umsetzer umgesetzten, vom zweiten Integrator oder zugehörigem Akkumulator ausgegebenen zweiten, vorzugsweise akkumulierten Ergebniswert gemäß einer vorbestimmten Rechenvorschrift miteinander zu verknüpfen und das Rechenergebnis auszugeben. Die Rechenvorschrift ist dabei besonders bevorzugt

$$ s = \frac{cT}{4}\left(1 + \frac{A_2 - A_1}{A_1 + A_2}\right) \quad \text{mit} \quad A_1 = \sum_{n=1}^{200} pE_1 \quad \text{und} $$

$$A_2 = \sum_{n=1}^{200} pE_2$$ , wobei *s* das Rechenergebnis, *c* die Lichtgeschwindigkeit, *T* die erste Aktivitätszeitspanne (für eine Entfernungsmessung bis zu 3m mit einem Signalweg bis zu 6m z.B. 20ns, entsprechend der Laufzeit des Lichtimpulses über den Signalweg von 6m), $A_1$ der vom A/D-Umsetzer umgesetzte, im Beispielsfall über 200 Messzyklen akkumulierte erste Ergebniswert und $A_2$ der vom A/D-Umsetzer umgesetzte, im Beispielsfall ebenfalls über 200 Messzyklen akkumulierte zweite Ergebniswert sind. Diese Rechenvorschrift verknüpft die Ergebniswerte zweier Abstandsbestimmungen dergestalt, dass ein fehlerreduziertes Rechen- und damit Messergebnis zur Verfügung gestellt wird. Außerdem geht die gesamte erfasste Lichtenergie als Summe der beiden Ergebniswerte, $A_1 + A_2$, in die Abstandsmessung ein.

Die Kontrolleinheit kann ausgebildet sein, nach der Durchführung eines ersten Messzyklus' mit einer ersten Aktivitätszeitspanne einen zweiten Messzyklus mit einer zweiten Aktivitätszeitspanne durchzuführen, wobei die zweite Aktivitätszeitspanne kürzer als die erste Aktivitätszeitspanne ist.

Dabei kann die Kontrolleinheit zudem ausgebildet sein, beim Durchführen des zweiten Messzyklus' nach dem Abgeben des Sendestartsignals eine Wartezeitspanne verstreichen zu lassen und nach dem Verstreichen der Wartezeitspanne das Integratorsteuersignal zum Starten des ersten Integrators abzugeben. Da der Messfehler mit größeren Abständen zunimmt, kann durch das Durchführen eines zweiten Messzyklus mit einer Wartezeitspanne eine eigene Messung für größere Abstände vorgesehen werden, wobei durch die Wartezeitspanne verhindert wird, dass während der Wartezeitspanne bereits Störeinflüsse das Ausgangssignal des ersten Integrators verfälschen, bevor Anteile des von einem entfernten Objekt reflektierten Lichtimpulses auf die Empfängermatrix zurückgelangen konnten.

Besonders bevorzugt ist die Sendeeinheit ausgebildet, Lichtimpulse unterschiedlicher Impulsdauer auszusenden, wobei die Impulsdauer von der Kontrolleinheit durch das Sendestartsignal vorgebbar ist, und dass die Kontrolleinheit ausgebildet ist, den ersten Messzyklus mit einem Lichtimpuls einer ersten Impulsdauer und einer ersten Intensität und den zweiten Messzyklus mit einem Lichtimpuls einer zweiten Impulsdauer und einer zweiten Intensität durchzuführen, wobei die erste Impulsdauer größer als die zweite Impulsdauer und die erste Intensität geringer als die zweite Intensität sind. Diese Ausführungsvariante besitzt den Vorteil, dass für den zweiten Messzyklus bei ähnlichem Energieverbrauch aufgrund der kürzeren Impulsdauer eine höhere Intensität des Lichtimpulses vorgesehen werden können, wobei die höhere Intensität ein zusätzlich verbessertes Messergebnis der Abstandsbestimmung für weit entfernte Objekte ermöglicht.

Bei einer vorteilhaften Ausführung der erfindungsgemäßen Vorrichtung ist die Kontrolleinheit ausgebildet, anhand des Ausgangssignals der Empfängermatrix des ersten Messzyklus' einen Abstand einer Region-of-Interest zur Empfängermatrix zu bestimmen und die Wartezeitspanne kleiner oder gleich der Laufzeit von Licht über eine dem doppelten Abstand entsprechende Strecke zu bemessen. Dies bietet den Vorteil, dass die zweite fehlerreduzierte Messung auf genau den Abstandsbereich abgestimmt werden kann, in dem ein Objekt von Interesse durch den ersten Messzyklus geortet wurde. Die Region-of-Interest kann dabei beispielsweise dadurch bestimmt werden, dass ein Histogramm der für die einzelnen photoelektrischen Elemente der Empfängermatrix bestimmten Abstandswerte erstellt und aus diesem Histogramm der Abstand zur Region-of-Interest abgeleitet wird. Diese Ableitung kann sich auf den am häufigsten vorgefundenen Abstandswert, den Schwerpunkt des Histogramms oder den niedrigsten aufgefundenen Abstandswert beziehen, wobei bekannte statistische Auswertungsverfahren Verwendung finden können.

Vorteilhafterweise entspricht die für diese Ausführungsvariante gewählte Integrationszeit einer Aktivitätszeitspanne die sich aus der Laufzeit des Lichtimpulses bis zu einem Objekt in der Mitte des interessierenden Abstandbereiches abzüglich der Wartezeitspanne.

Vorzugsweise ist dabei die Impulsdauer des Lichtimpulses gleich der zweiten Aktivitätszeitspanne, so dass die Impulsdauer des während der Durchführung des zweiten Messzyklus ausgesendeten Lichtimpulses genauso lang ist wie die Zeitspanne, während derer der erste Integrator das Messsignal integriert.

Alle Ausführungsvarianten der erfindungsgemäßen Vorrichtung können über einen Bildsensor verfügen, der ausgebildet ist, einen auf den Bildsensor projizierten Bildbereich in einem zweidimensionalen Bild, insbesondere einem zweidimensionalen Farbbild, zu erfassen, und so angeordnet ist, dass sich der von dem Bildsensor erfasste Bildbereich und ein von der Empfängermatrix erfasster Bildbereich wenigstens in einem Teilbereich überschneiden, wobei die Kontrolleinheit ausgebildet ist, das zweidimensionale Bild und das ausgewertete Ausgangssignal in dem Teilbereich zu einem dreidimensionalen Bild zu verknüpfen, so dass das dreidimensionale Bild zu jedem Bildpunkt einen Abstandswert aufweist.

Besonders bevorzugt weist dabei der Bildsensor eine höhere Auflösung auf als die Empfängermatrix, die die für die Abstandsmessung genutzten photoelektrischen Elemente umfasst. Aufgrund der geringeren Anforderungen an die Sensitivität gegenüber Licht können die Abmessungen eines Bildpunktes des Bildsensors gegenüber denen eines photoelektrischen Elementes der Empfängermatrix stark verkleinert werden, so dass zu jedem photoelektrischen Element der Empfängermatrix mehrere Bildpunkte des Bildsensors zugeordnet werden können.

Ein zweiter Aspekt der Erfindung betrifft ein verbessertes Verfahren zur Abstandsbestimmung gemäß Anspruch 23.

Das erfindungsgemäße Verfahren liefert eine verbesserte Abstandsbestimmung, da der Photostrom des photoelektrischen Elementes vor und nach einem durch das Verstreichen der ersten Aktivitätszeitspanne und dem Beginn des zweiten Verstreichens der ersten Aktivitätszeitspanne gekennzeichneten Zeitpunkt zu jeweils einem eigenen Ausgangssignal integriert wird, wobei das erste und das zweite Ausgangssignal eine Information über die relative zeitliche Lage des Umschaltzeitpunktes zu den nach einer entsprechenden Laufzeit eintreffenden reflektierten Anteilen des Lichtimpulses enthalten, auf deren Grundlage das fehlerreduzierte Bestimmen einer Signallaufzeit des Lichtimpulses und damit eines Abstandes zu einem reflektierenden Objekt erfolgt.

Bevorzugt wird eine Variante des erfindungsgemäßen Verfahrens, bei der die erste Aktivitätszeitspanne gleich der vorbestimmbaren Impulsdauer des Lichtimpulses ist. Diese Verfahrensvariante spart einerseits Energie, weil der ausgesendete Lichtimpuls nicht länger als die erste Aktivitätszeitspanne ist, während derer der Photostrom integriert wird, und verschlechtert andererseits das Ergebnis der Abstandsbestimmung nicht dadurch, dass über die Impulsdauer des ausgesendeten Lichtimpulses hinaus das Ergebnis der Abstandsbestimmung verfälschende Photoströme des photoelektrischen Elementes in die Abstandsbestimmung einbezogen werden.

Vorteilhafterweise kann bei einer Verfahrensvariante die Intensität des Lichtimpulses im Schritt des Aussendens des Lichtimpulses vorgebbar sein. Dadurch kann die Durchführung der Abstandsbestimmung an das in einem Messumfeld jeweils vorhandene Umgebungslicht angepasst werden, indem beispielsweise in einer Umgebung mit mehr Umgebungslicht ein Lichtimpuls größerer Intensität verwendet wird.

Um den Messfehler bei der Abstandsbestimmung zu reduzieren, werden bei einer Verfahrensvariante die Schritte des Aussendens des Lichtimpulses, des Integrierens des Photostromes während des ersten Verstreichens der ersten Aktivitätszeitspanne und des Integrierens des Photostromes während des zweiten Verstreichens der ersten Aktivitätszeitspanne vor den Schritten des Ausgebens des ersten Ausgangssignals und des Ausgebens des zweiten Ausgangssignals mehrfach durchgeführt, wodurch sich der Messfehler durch Mittelung, zum Beispiel durch Bilden eines arithmetischen Mittelwerts, verringert.

Um auch geringe Abstände bestimmen zu können, werden bei einer bevorzugten Variante des erfindungsgemäßen Verfahrens die Schritte des Aussendens des Lichtimpulses und des Integrierens des Photostromes während des ersten Verstreichens der ersten Aktivitätszeitspanne gleichzeitig ausgeführt.

Alternativ kann bei einer Verfahrensvariante zwischen dem Beginn des Aussendens des Lichtimpulses und dem Beginn des Integrierens des Photostromes während des ersten Verstreichens der ersten Aktivitätszeitspanne eine Wartezeitspanne verstreichen gelassen werden. Diese alternative Verfahrensvariante ist für die Abstandsbestimmung zu weiter entfernten Objekten geeignet, wobei ein fehlerreduziertes Messergebnis zur Verfügung gestellt wird, indem während der Wartezeitspanne, während derer noch keine reflektierten Anteile des ausgesendeten Lichtimpulses zurück zu dem photoelektrischen Element gelangen können, der Photostrom des photoelektrischen Elementes nicht integriert wird und damit das Messergebnis der Abstandsbestimmung nicht beeinflussen kann.

Besonders bevorzugt wird eine Variante des erfindungsgemäßen Verfahrens, bei dem zwei Messzyklen durchgeführt werden, wobei beim ersten Messzyklus die Schritte des Aussendens des Lichtimpulses und des Integrierens des Photostromes während des ersten Verstreichens der ersten Aktivitätszeitspanne gleichzeitig ausgeführt werden und beim zweiten Messzyklus zwischen dem Beginn des Schrittes des Aussendens des Lichtimpulses und dem Beginn des Schrittes des Integrierens die Wartezeitspanne verstreichen lassen wird. Bei dieser Verfahrensvariante wird durch den ersten Messzyklus ein Messergebnis für reflektierende Objekte mit einem geringen Abstand zum Ort der Abstandsbestimmung und durch den zweiten Messzyklus ein Messergebnis für reflektierende Objekt mit einem größeren Abstand bestimmt, wobei das Messergebnis für die Objekte mit einem größeren Abstand aufgrund des Vorsehens der Wartezeitspanne einen reduzierten Messfehler aufweist.

Bei einer Fortführung dieser Verfahrensvariante wird die Wartezeitspanne durch Auswerten des Ausgangssignals des ersten Messzyklus' hinsichtlich eines Abstands zu einer Region-of-Interest bestimmt, wobei die Wartezeitspanne kleiner oder gleich der Laufzeit von Licht über eine dem doppelten Abstand zu der Region-of-Interest entsprechende Strecke bemessen wird. Bei dieser Verfahrensvariante wird durch das Auswerten des Ausgangssignals des ersten Messzyklus' ein Abstand bestimmt, auf dem die Wartezeitspanne des zweiten Messzyklus' abgestimmt wird, um ein fehlerreduziertes Messergebnis der Abstandsbestimmung speziell für Abstände im Bereich des Abstandes zu der Region-of-Interest zu bestimmen.

Da die Qualität der Abstandsbestimmung mit wachsenden Abständen aufgrund der quadratisch abnehmenden Intensität der reflektierten Anteile des ausgesendeten Lichtimpulses abnimmt, wird eine Verfahrensvariante bevorzugt, bei der im ersten Messzyklus im Schritt des Aussendens des Lichtimpulses ein Lichtimpuls mit einer ersten Impulsdauer und einer ersten Intensität und im zweiten Messzyklus im Schritt des Aussendens des Lichtimpulses ein Lichtimpuls mit einer zweiten Impulsdauer und einer zweiten Intensität ausgesendet werden, wobei die erste Impulsdauer größer als die zweite Impulsdauer und die erste Intensität niedriger als die zweite Intensität sind. Die größere zweite Intensität bewirkt eine entsprechend vergrößerte Intensität der reflektierten Anteile des ausgesendeten Lichtimpulses, so dass die im zweiten Messzyklus durchgeführte Abstandsbestimmung für große Abstände hinsichtlich des Ergebnisses der Messung verbessert wird.

Bei allen Verfahrensvarianten kann das erste ausgegebene Ausgangssignal und das zweite ausgegebene Ausgangssignal gemäß einer vorbestimmten Rechenvorschrift miteinander verknüpft werden, wobei das Ergebnis der vorbestimmten Rechenvorschrift einen Abstand bezeichnet. Besonders bevorzugt ist diese Rechenvorschrift $s = \dfrac{cT}{4}\left(1 + \dfrac{A_2 - A_1}{A_1 + A_2}\right)$, wobei s das Rechenergebnis, c die Lichtgeschwindigkeit, T die erste Aktivitätszeitspanne, $A_1$ der vom A/D-Umsetzer umgesetzte erste Ergebniswert und $A_2$ der vom A/D-Umsetzer umgesetzte zweite Ergebniswert sind.

Das erfindungsgemäße Verfahren kann einen Schritt des Aufnehmens eines zweidimensionalen Bildes, insbesondere eines Farbbildes, und ein Schritt des Verknüpfens des zweidimensionalen Bildes und der ausgewerteten Ausgangssignale zu einem dreidimensionalen Bild umfassen, wobei das dreidimensionale Bild zu jedem Bildpunkt einen Abstandswert aufweist.

Die Erfindung wird im Folgenden anhand von Abbildungen von Ausführungsbeispielen näher erläutert. Es zeigen:

Figur 1    eine Darstellung eines Ausführungsbeispiel der erfindungsgemäßen Vorrichtung in Form eines Blockdiagramms;

Figur 2    eine Darstellung einer Variante des erfindungsgemäßen Verfahrens in Form eines Flussdiagramms;

Figur 3    eine Übersicht über den zeitlichen Ablauf einer Variante des erfindungsgemäßen Verfahrens;

Figur 4    eine Übersicht über den zeitlichen Ablauf einer anderen Variante des erfindungsgemäßen Verfahrens

Figur 5    eine erste Schaltungsvariante einer eines photoelektrischen Elementes in Form einer Photodiode mit 2 daran angeschlossenen Integratoren; und

Figur 6    eine zweite Schaltungsvariante einer eines photoelektrischen Elementes in Form einer Photodiode mit 2 daran angeschlossenen Integratoren.

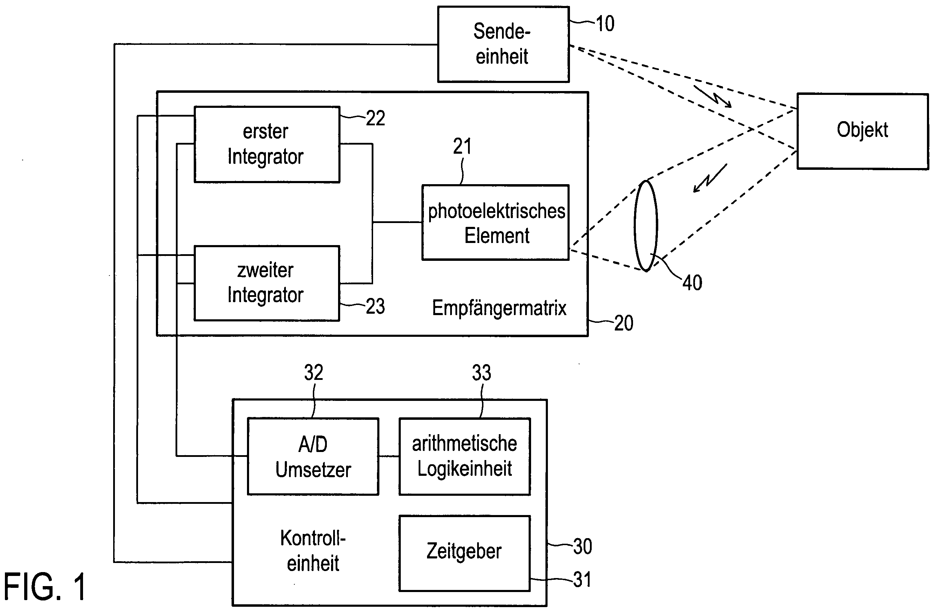

Figur 1 zeigt ein Ausführungsbeispiel der erfindungsgemäßen Vorrichtung in einem Blockdiagramm.

Die Vorrichtung zur Abstandsbestimmung gliedert sich in drei Hauptkomponenten, eine Sendeeinheit 10, eine Empfängermatrix 20 und eine Kontrolleinheit 30, die durch Signalleitungen miteinander verbunden sind. Die Sendeeinheit 10 ist dazu ausgebildet, auf Veranlassen durch die Kontrolleinheit 30 einen Lichtimpuls auszusenden, wobei die Impulsdauer und Intensität des ausgesendeten Lichtimpulses von der Kontrolleinheit 30 vorgegeben werden. Die von einem Objekt reflektierten Anteile des ausgesendeten Lichtimpulses gelangen auf eine Optik 40, die die einfallenden reflektierten Anteile auf ein photoelektrisches Element 21 oder ein zweidimensionales Feld von photoelektrischen Elementen 21 projiziert. Das photoelektrische Element 21 bildet Teil der Empfängermatrix 20, die für jedes photoelektrische Element 21 einen ersten Integrator 22 und einen zweiten Integrator 23 aufweist, deren Integratoreingänge mit dem Ausgang des photoelektrischen Elementes 21 verbunden sind. Das photoelektrische Element 21 erzeugt in Abhängigkeit der Intensität des auf es einfallendes Lichtes einen Photostrom, der auf die Integratoreingänge von erstem Integrator 22 und zweitem Integrator 23 gelangt.

Der erste Integrator 22 und der zweite Integrator 23 verfügen über jeweils einen Steuereingang, wobei bei einer Ausführung der Vorrichtung zur Abstandsbestimmung sämtliche Steuereingänge der ersten Integratoren 22 beziehungsweise der zweiten Integratoren 23 miteinander verbunden sind, so dass sich die ersten Integratoren 22 unabhängig von den zweiten Integratoren 23 aktivieren lassen, jedoch keiner der ersten Integratoren 22 unabhängig von den restlichen ersten Integratoren 22. Die Steuereingänge von ersten Integratoren 22 und zweiten Integratoren 23 sind mit der Kontrolleinheit 30 verbunden, die ausgebildet ist, die ersten Integratoren 22 und zweiten Integratoren 23 zu steuern. Jeder erste Integrator 22 und jeder zweite Integrator 23 verfügt außerdem über einen Ausgang für ein Ausgangssignal, der von der Kontrolleinheit 30 individuell ausgelesen werden kann. Die Integratoren 22 und 23 sind dazu ausgebildet, bei Aktivierung durch die Kontrolleinheit 30 einen am Integratoreingang anliegenden Photostrom zu integrieren und dadurch einen Integratorstand zu bilden. Auf Veranlassung durch die Kontrolleinheit 30 geben die Integratoren 22 und 23 den durch Integrieren gebildeten Integratorstand als Ausgangssignal aus.

Die Kontrolleinheit 30 verfügt über einen A/D-Umsetzer 32, der mit dem Ausgang der Integratoren 22 und 23 verbunden und ausgebildet ist, das von den Integratoren 22 und 23 ausgegebene Ausgangssignal in eine digitale Repräsentation zu überführen. Der A/D-Umsetzer 32 ist mit einer arithmetischen Logikeinheit 33 verbunden, welche ausgebildet ist, die von den Integratoren 22 und 23 stammenden und in eine digitale Repräsentation überführten Ausgangssignale auszuwerten.

Die arithmetische Logikeinheit verknüpft die digitalisierten Ausgangssignale 33 gemäß einer vorgegebenen Rechenvorschrift und errechnet für die Ausgangssignale der jedem photoelektrische Element 21 zuge-

ordneten Integratoren 22 und 23 einen Ergebniswert, der einen Abstand angibt, der die Strecke beschreibt, die zwischen dem jeweiligen photoelektrischen Element 21 und einem dem jeweiligen photoelektrischen Element 21 aufgrund des Strahlenganges der Optik 40 zugeordneten Punkt des reflektierenden Objektes liegt.

Die Kontrolleinheit 30 verfügt außerdem über einen Zeitgeber 31, der ausgebildet ist, der Kontrolleinheit 30 das Verstreichen einer von der Kontrolleinheit 30 vorgegebenen Zeitspanne anzuzeigen. Der Zeitgeber ermöglicht die Durchführung von komplexen Verfahren zur Abstandsbestimmung, die einen reduzierten Messfehler als Ergebnis liefern.

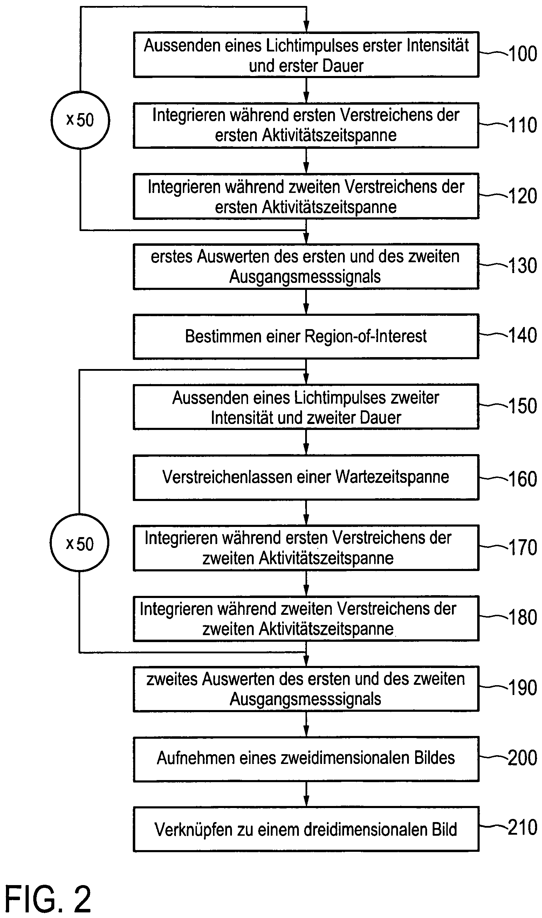

Figur 2 zeigt eine Variante des erfindungsgemäßen Verfahrens in einem Flussdiagramm, das in Schritt 100 mit dem Aussenden eines Lichtimpulses einer ersten Intensität und einer ersten Impulsdauer beginnt. Gleichzeitig mit dem Beginn des Aussendens des Lichtimpulses wird in Schritt 110 angefangen, den Photostrom eines photoelektrischen Elementes während eines ersten Verstreichens einer ersten Aktivitätszeitspanne zu integrieren. Nach dem ersten Verstreichen der ersten Aktivitätszeitspanne wird direkt anschließend der Photostrom des photoelektrischen Elementes über ein zweites Verstreichen der ersten Aktivitätszeitspanne integriert (Schritt 120). Um den Messfehler der Abstandsbestimmung zu reduzieren, wird nach Schritt 120 zurück zum Schritt 100 verzweigt, nachdem eine Wartezeitspanne verstreichen gelassen wurde, die sicherstellt, dass keine von einem weit entfernten Objekt reflektierten Anteile des ausgesendeten Lichtimpulses während des erneuten Integrierens des Photostromes während des ersten Verstreichens der ersten Aktivitätszeitspanne eintreffen. Die Schritte 100 bis 120 werden im dargestellten Beispiel 50 Mal wiederholt, wobei die Anzahl der Wiederholungen nach oben hin durch die Gegebenheiten der Abstandsbestimmung wie etwa die maximale für die Messung zur Verfügung stehende Zeit oder durch die Abstandsbestimmung zu einem beweglichen Objekt bedingt werden.

Nach den 50 Iterationen setzt sich das Verfahren mit dem Schritt 130 fort, in dem ein erstes Auswerten eines ersten und eines zweiten Ausgangssignals vorgenommen wird. Das erste und das zweite Ausgangssignal repräsentieren den durch das in den Schritten 110 und 120 jeweils gebildeten Integratorstand, welcher nach dem Auslesen zurückgesetzt wird. In Schritt 140 wird im Zuge des Auswertens eine Region-of-Interest bestimmt, in der ein Objekt zu liegen scheint, für das durch eine zweite Messung verbesserte Messergebnisse bestimmt werden sollen. In Schritt 150 wird wiederum ein Lichtimpuls ausgesendet, wobei dieser nun eine zweite Intensität und eine zweite Impulsdauer aufweist und wobei die zweite Intensität größer als die erste Intensität und die zweite Impulsdauer geringer als die erste Impulsdauer sind. Während die Impulsdauer des im Schritt 100 ausgesendeten Lichtimpulses gleich der ersten Aktivitätszeitspanne ist, ist die zweite Impulsdauer gegenüber der ersten Aktivitätszeitspanne um die Dauer einer Wartezeitspanne verkürzt, die sich als die doppelte Laufzeit von Licht über den Abstand zu der Region-of-Interest berechnet. Nach dem Schritt 150 wird im Schritt 160 diese Wartezeitspanne verstreichen gelassen, bevor im Schritt 170 mit dem Integrieren des Photostroms des photoelektrischen Elementes während eines ersten Verstreichens der zweiten Aktivitätszeitspanne begonnen wird. Die zweite Aktivitätszeitspanne entspricht dabei der Dauer der ersten Aktivitätszeitspanne minus die Wartezeitspanne. Nach dem ersten Verstreichen der zweiten Aktivitätszeitspanne wird in Schritt 180 ein zweiter Schritt des Integrierens des Photostromes während eines erneuten Verstreichens der zweiten Aktivitätszeitspanne durchgeführt. Anschließend verzweigt das Verfahren für wiederum 50 Iterationen zum Schritt 150 zurück, um wie schon zuvor das Messergebnis der Abstandsbestimmung durch Mittelung, zum Beispiel durch Bildung des arithmetischen Mittelwerts, einer Vielzahl von Abstandsbestimmungen zu verbessern.

Nach dem Durchführen der 50 Iterationen wird im Schritt 190 ein zweites Auswerten des ersten und des zweiten Ausgangssignals durchgeführt, wobei die Messergebnisse aufgrund der höheren zweiten Intensität und des Vorsehens der Wartezeitspanne gegenüber den im Schritt 130 bestimmten Ergebniswerten verbessert sind. Im anschließenden Schritt 200 wird ein zweitdimensionales Farbbild aufgenommen, das mit den bestimmten Abstandswerten zu einem dreidimensionalen Bild im abschließenden Schritt 210 verknüpft wird.

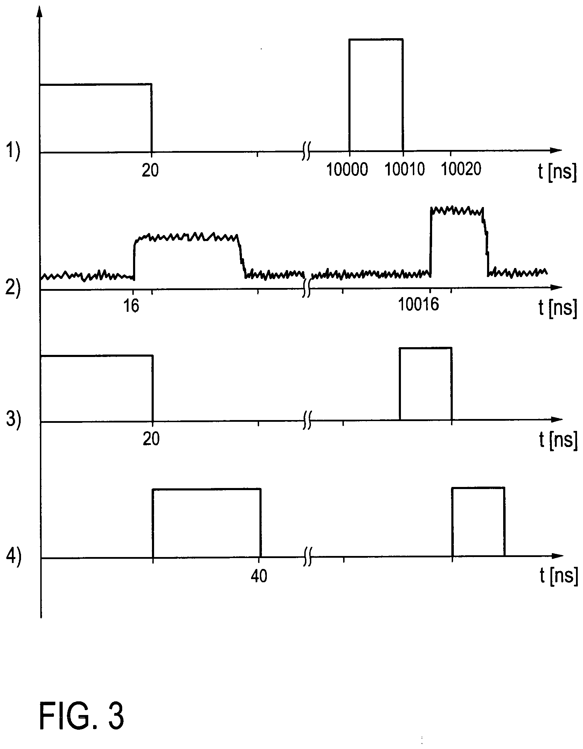

Figur 3 zeigt eine Übersicht über den zeitlichen Ablauf einer Variante des erfindungsgemäßen Verfahrens. Das dargestellte Koordinatensystem zeigt in vier Unterkoordinatensystemen 1) bis 4) vier verschiedene Signale, die jeweils über der in Nanosekunden ns angegebenen Zeit t aufgetragen wurden. In dem Unterkoordinatensystem 1) ist das Sendestartsignal aufgetragen, bei dessen Anliegen die Sendeeinheit einen Lichtimpuls aussendet. Im vorliegenden Fall wird die Impulsdauer des auszusendenden Lichtimpulses durch die Dauer des Anliegens des Sendestartsignals und die Intensität des auszusendenden Lichtimpulses durch die Amplitude des Sendestartsignals vorgegeben. In der der Figur 3 zugrundeliegenden Variante des erfindungsgemäßen Verfahrens wird somit zum Zeitpunkt Null mit dem Aussenden eines Lichtimpulses von 20 ns Impulsdauer und mittlerer Intensität begonnen.

Das Unterdiagramm 2) zeigt den von dem photoelektrischen Element ausgegebenen Photostrom, wobei der Photostrom durch Rauschen und Hintergrundlicht jederzeit größer Null und nicht konstant ist. Etwa nach 16 ns erreicht der von einem Objekt reflektierte Lichtimpuls das photoelektrische Element, so dass für den Zeitraum zwischen 16 und 36 ns ein erhöhter Photostrom festgestellt werden kann, was entsprechend in dem Unterdiagramm 2) dargestellt ist. Gleichzeitig mit dem Aussenden des ersten Lichtimpulses wird zum Zeitpunkt Null durch Vorgabe des in dem Unterdiagramm 3) dargestellten Integratorsteuersignals der erste Integrator dazu veranlasst, den Photostrom zu einem Integratorstand zu integrieren. Nach Verstreichen der 20 ns dauernden Aktivierung des ersten Integrators wir dieser deaktiviert und der zweite Integrator für weitere 20 ns aktiviert.

Es sei hier noch einmal darauf hingewiesen, dass sich die Integrationszeiten (Aktivitätsphasen) der beiden Integratoren auch überlappen können oder dass eine Lücke zwischen beiden Aktivitätsphasen bestehen kann. Solange der Zeitraum des Überlappens oder die Dauer der Lücke bekannt ist, ist in beiden Fällen eine Entfernungsmessung im Sinne der Erfindung möglich.

Aus dem Vergleich der relativen Lage des in dem Unterdiagramm 2) dargestellten aufgrund des reflektierten Lichtimpulses erhöhten Photostromes zu den Aktivierungsphasen von erstem und zweitem Integrator wird deutlich, dass die Differenz des ersten und des zweiten Integratorstandes eine Information über die Laufzeitverzögerung des Lichtimpulses enthält. Ergibt sich die Differenz der Integratorstände des ersten und des zweiten Integrators zu Null, muss ein gleich großer Anteil des durch den reflektierten Lichtimpuls erhöhten Photostromes jeweils innerhalb der Aktivierungsphase des ersten und des zweiten Integrators auf das photoelektrische Element gelangt sein. Dies bedeutet, dass das reflektierende Objekt sich in einer solchen Entfernung zu der für die Abstandsbestimmung verwendeten Vorrichtung befindet, dass die Laufzeit von Licht zu diesem Objekt hin und von diesem Objekt zu der Vorrichtung zurück 10 ns beträgt. Der Abstand zu dem reflektierenden Objekt ergibt sich somit durch Multiplikation der gemessenen 10 ns mit der halben Lichtgeschwindigkeit in dem Beispiel einer Laufzeit von 10 ns zu ungefähr 1,5 m.

In dem in der Figur 3 dargestellten Beispiel betrug die Laufzeit ungefähr 16 ns, weshalb der Integratorstand des zweiten Integrators etwa einen viermal höheren Wert als der Integratorstand des ersten Integrators aufweist, was nach Berücksichtigung in einer für die Auswertung vorgesehenen Rechenvorschrift zu einem bestimmten Abstand von etwa 2,5 m führt.

Nach der ersten Durchführung der Abstandsbestimmung wird eine Wartezeitspanne von beispielsweise 160 ns abgewartet, die sicherstellt, dass keine von einem weit entfernten Objekt reflektierten Anteile des ausgesendeten Lichtimpulses nachfolgende Messungen verfälschen. Die Abstandsbestimmung wird im dargestellten Beispiel anschließen 50 mal wiederholt, was in den Unterdiagrammen 1) bis 4) nicht dargestellt ist. Die Wiederholung der Abstandmessung und das Aufsummieren bzw. Akkumulieren der Integratorstände über beispielsweise 50 Messzyklen ist auch deshalb häufig erforderlich, da im Extremfall während einer Integrationszeit eines Messzyklus' kein einziges Photon des reflektierten Lichtimpulses vom jeweiligen photoelektrischen Element erfasst wird, da die Energie des reflektierten Lichtimpulses so schwach ist, dass theoretisch nur ein Bruchteil eines Photons pro Messzyklus zu erwarten ist und somit statistisch nicht in jedem Messzyklus mit dem Erfassen eines Photons zu rechnen ist.

Das Messergebnis der ersten 50 Messzyklen wird verwendet, um die Länge einer Wartezeitspanne zu bestimmen, deren Dauer kleiner oder gleich der Laufzeit von Licht über dem doppelten Abstand zu einer Region-of-Interest ist. Im vorliegenden Beispiel wurde die Wartezeitspanne zu 10 ns bestimmt und die Impulsdauer des ausgesendeten Lichtimpulses entsprechend um 10 ns verkürzt. Gleichzeitig wurde, wie im Unterdiagramm 1) dargestellt, die Intensität des ausgesendeten Lichtimpulses durch Vorgabe eines entsprechend erhöhten Sendestartsignals erhöht. Nach Verstreichen der Wartezeitspanne von 10 ns wird zum Zeitpunkt 10010 ns mit dem Integrieren des Photostromes durch Vorgabe des im Unterdiagramm 3) dargestellten Integratorsteuersignals für den ersten Integrator begonnen. Zum Zeitpunkt 10020 ns wird der erste Integrator abgeschaltet und der zweite aktiviert. Das Messergebnis dieses zweiten Messzyklus' der Abstandsbestimmung weist gegenüber dem des ersten Messzyklus' einen verringerten Messfehler auf, weil die Intensität des ausgesendeten Lichtimpulses erhöht wurde und durch das Vorsehen der Wartezeitspanne weniger durch Rauschen und durch Hintergrundlicht erzeugter Photostrom in das Messergebnis einbezogen wird.

Der zweite Messzyklus wird ebenfalls wie der erste in dem dargestellten Beispiel 50 mal wiederholt, um das Messergebnis der Abstandsbestimmung weiter zu verbessern. Diese 50 Iterationen sind in der Figur 3 nicht dargestellt.

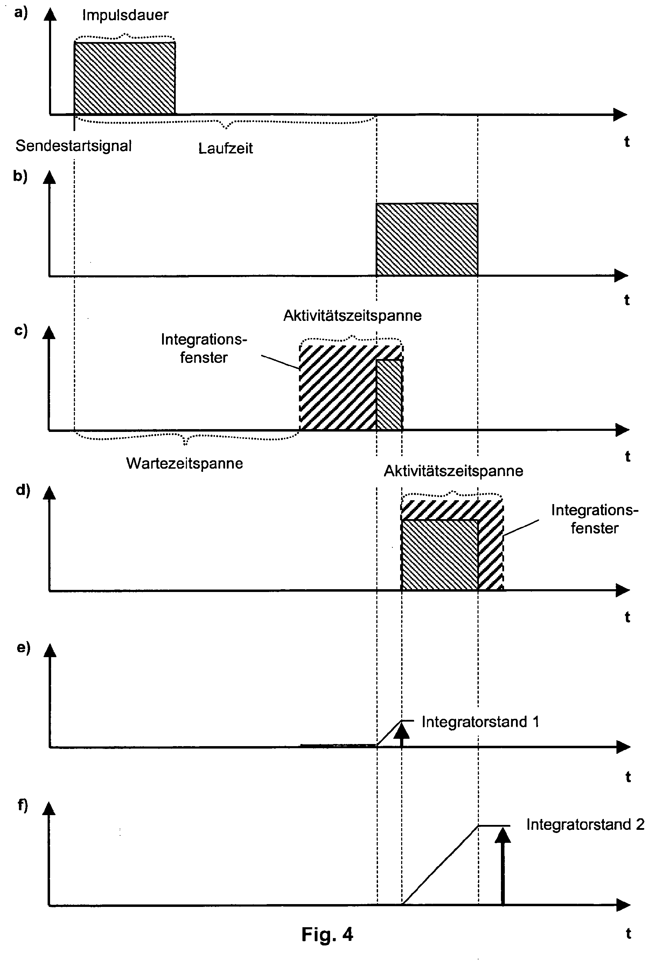

Figur 4 zeigt eine Übersicht über den zeitlichen Ablauf einer anderen Variante des erfindungsgemäßen Verfahrens. Das dargestellte Koordinatensystem zeigt in sechs Unterkoordinatensystemen a) bis f) sechs verschiedene Signale, die jeweils über der Zeit t aufgetragen sind.

In dem Unterkoordinatensystem a) ist ein mit einem von der Kontrolleinheit an die Sendeeinheit ausgegebenen Sendestartsignal von der Sendeeinheit ausgesendeter Lichtimpuls mit einer vorgebbaren Impulsdauer aufgetragen. Der im Unterkoordinatensystem b) aufgetragene Lichtimpuls ist der von der Sendeeinheit ausgesendete nach einer von dem Abstand des zu messenden Objektes abhängigen Laufzeit vom Objekt reflektierte und von der Empfängermatrix empfangene Lichtimpuls, der in etwa die selbe Impulsdauer aufweist, wie der von der Sendeeinheit ausgesendete Lichtimpuls.

Wie in dem Unterkoordinatensystem c) aufgetragen ist, erfolgt nach einer vorgebbaren Wartezeit, die in diesem Fall größer als Null und kleiner als die Laufzeit des von der Sendeeinheit ausgesendeten und von der Empfängermatrix empfangenen Lichtimpulses ist, der Start des ersten Integrators durch die Abgabe eines ersten Integratorsteuersignals durch die Kontrolleinheit an den ersten Integrator. Das Integratorsteuersignal kann ein Integratorstartsignal oder ein Integratoreinschaltsignal mit einer vorgebbaren Einschaltdauer des Integrators sein. Nach dem Einschalten des ersten Integrators beginnt dieser mit der Integration eines am Eingang des ersten Integrators anliegenden Eingangssignals. Dieses ist (in der idealisierten Betrachtung) solange 0, solange der reflektierte Sendeimpuls mit seiner vorderen Flanke noch nicht das photoelektrische Element 21 erreicht hat. Die Einschaltdauer des ersten Integrators ist durch die Aktivitätszeitspanne vorgegeben und definiert die Integrationszeit, die im dargestellten Fall der Impulsdauer des Lichtimpulses gleicht. Da aber die Aktivitätszeitspanne des ersten Integrators vor dem Empfang des vom Messobjekt reflektierten Lichtimpulses beginnt, trifft nur ein erster Teil dieses Lichtimpulses während der ersten Integrationszeit auf das photoelektrische Element 21 und führt zu einem entsprechenden Eingangssignal des ersten Integrators, das dieser integriert, so wie es in Figuren 4c und 4e dargestellt ist. Der am Ende der ersten Integrationszeit anliegende Integratorstand des ersten Integrators ist ebenfalls in Figur 4e dargestellt. Nach der ersten Integrationszeit wird der erste Integrator entweder durch das Integratoreinschaltsignal oder durch ein weiteres von der Kontrolleinheit an den ersten Integrator ausgegebenes Integratorsteuersignal, in diesem Fall ein Integratorstopsignal, ausgeschaltet.

Zeitgleich gibt die Kontrolleinheit, analog wie zuvor für den ersten Integrator, an den zweiten Integrator ein weiteres Integratorsteuersignal ab, das den zweiten Integrator einschaltet. Die ebenfalls durch die Aktivitätszeitspanne vorgegebene zweite Integrationszeit des zweiten Integrators ist auch hier gleich der Impulsdauer.

Wie Figur 4d) zu entnehmen ist wird nur ein hinterer Teil des reflektierten Lichtimpulses innerhalb der zweiten Integrationszeit auf das photoelektrische Element 21 und sorgt für eine entsprechendes Eingangssignal des zweiten Integrators. Die hintere Flanke des reflektierten Lichtimpulses erreicht das photoelektrische Element, bevor die zweite Integrationszeit endet, so dass sich der Integratorstand des zweiten Integrators anschließend nicht weiter erhöht (sofern keine Störstrahlung auftritt). Der Integrationsstand des zweiten Integrators zum Ende der zweiten Integrationszeit ist in Figur 4f) dargestellt. Nach dem Ende der Aktivitätszeitspanne des zweiten Integrators wird dieser analog wie beim ersten Integrator ausgeschaltet.

Da der zweite Integrator unmittelbar nach dem Ausschalten des ersten Integrators eingeschaltet wird, wird der gesamte Energiegehalt des empfangenen Lichtimpulses für die Erzeugung eines tatsächlich genutzten Eingangssignals für den ersten bzw. den zweiten Integrators genutzt.

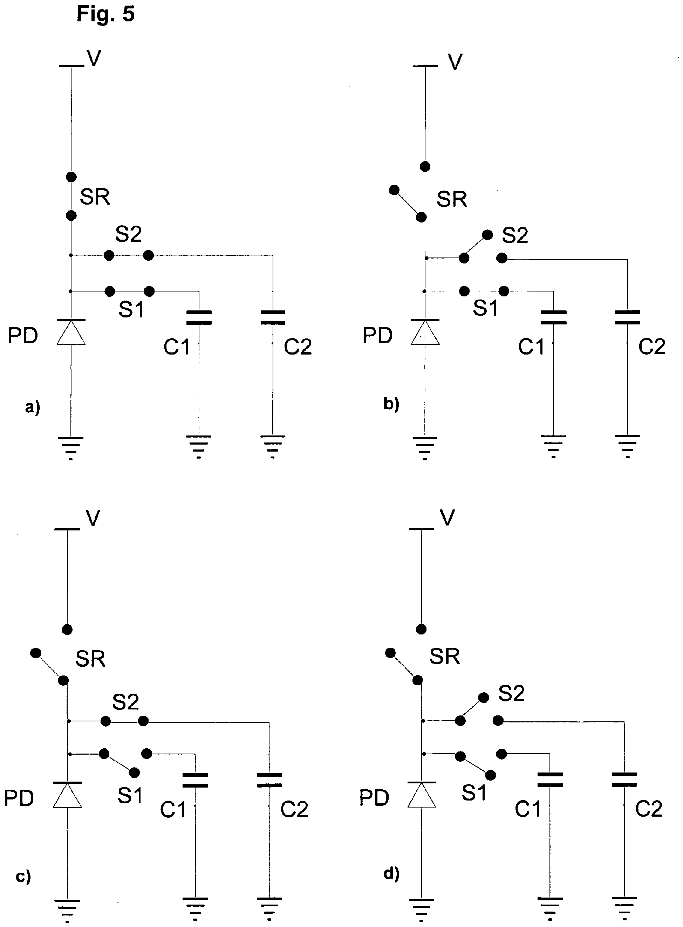

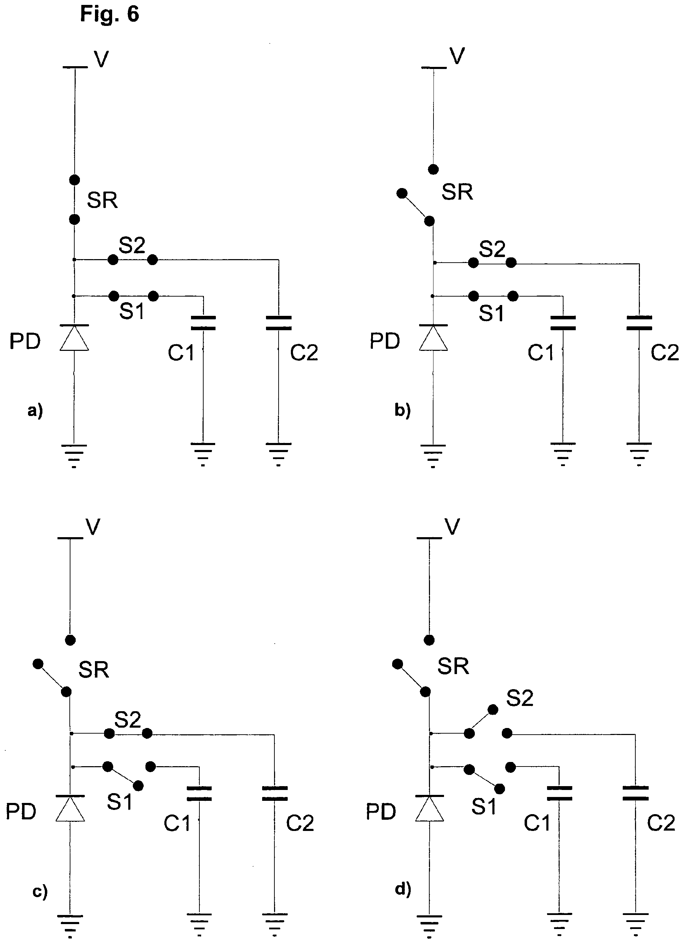

Figuren 5 und 6 zeigen jeweils hinsichtlich ihres Aufbaus identische Schaltungen. Die jeweils 4 Abbildungen in den Figuren 5 und 6 zeigen die Reihenfolge, in der entsprechende Schalter der Schaltungen betätigt werden. Hierin liegt der Unterschied zwischen den Ausführungsvarianten gemäß Figur 5 und 6.

Die Grundelemente der Schaltungen aus Figur 5 und Figur 6 sind ein photoelektrisches Element 21 in Form einer Photodiode PD sowie zwei Integratoren 22 und 23, die jeweils von einer Kapazität in Form je eines Kondensators C1 und C2 gebildet sind. Jeweils ein Anschluss der beiden jeweils einen Integrator bildenden Kondensatoren C1 und C2 sind genau wie die Anode der Photodiode PD über einen gemeinsamen Massekontakt miteinander verbunden. Die jeweils anderen Anschlüsse der beiden Kondensatoren C1 und C2 sind über jeweils einen Schalter S1 und S2 mit der Kathode der Photodiode PD verbunden. Somit ergibt sich ein elektrischer Knotenpunkt der Schaltung, in dem die Kathode der Photodiode PD und die beiden Schalter S1 und S2 miteinander verbunden sind. Zwischen diesem Knotenpunkt der Schaltung und einem Spannungsanschluss V für die Resetspannung ist ein dritter Schalter als Reset-Schalter SR angeordnet.

Im Folgenden wird nun zunächst die Funktionsweise der Schaltung gemäß Figuren 5a und 5d erläutert. Anschließend wird die Funktionsweise der Schaltung gemäß Figuren 6a bis 6d erläutert.

Zunächst - vor der ersten Integrationszeit - erfolgt ein Reset-Vorgang, bei dem alle drei Schalter, ähnlich der Reset-Schalter RS und die Schalter S1 und S2 für den Kondensator C1 und C2 geschlossen sind. Auf diese Weise werden die beiden Kondensatoren C1 und C2 auf eine Reset-Spannung V als Referenzwert aufgeladen. Dies ist in Figuren 5a und 6a dargestellt. Das heisst, die beiden Varianten gemäß Figuren 5 und 6 unterscheiden sich hinsichtlich des Reset-Vorgangs nicht.

Während der ersten Integrationszeit soll ein Signal gebildet werden, das von der während dieser Integrationszeit auf die Photodiode PD fallenden Lichtmenge abhängt. Um dieses Signal zu erzeugen, wird gemäß Figur 5b zunächst der Reset-Schalter RS geöffnet und gleichzeitig durch ein Integratorsteuersignal der Schalter S2 geöffnet, so dass sich einzig der erste Kondensator C1 während der ersten Integrationszeit über die Photodiode PD infolge des durch die Photodiode in Abhängigkeit der eintreffenden Lichtmenge fließenden Fotostroms entladen kann. Mit Öffnen der beiden Schalter RS und S2 beginnt die erste Integrationszeit, während der sich der erste Kondensator infolge des Photostroms entlädt. Zum Ende der ersten Integrationszeit wird der Schalter S1 geöffnet, so dass sich der erste Kondensator C1 nicht weiter entladen kann. Das Maß, um das der erste Kondensator C1 während der ersten Integrationszeit entladen wurde, kann als Integral des durch die Photodiode PD infolge des Lichtimpulses geflossenen Photostroms betrachtet werden. Gleichzeitig mit dem Öffnen des ersten Schalters S1 wird der zweite Schalter S2 geschlossen, während der Reset-Schalter S nach wie vor geöffnet bleibt. Mit dem Schließen des zweiten Schalters S2 beginnt die zweite Integrationszeit, während der sich der zweite Kondensator C2 über die Photodiode PD infolge des durch die Photodiode PD fließenden Photostroms entladen kann. Dieser Photostrom hängt - wie bereits zuvor ausgeführt - von der während des zweiten Integrationszeitfensters auf die Photodiode PD fallenden Lichtmenge ab. Außerdem kommt es zu Beginn der zweiten Integrationszeit nach dem Schließen des zweiten Schalters S2 zu einem Ausgleichsvorgang, der den eigentlichen Photostrom überlagert, da der zweite Kondensator C2 und die Photodiode zu Beginn der zweiten Integrationszeit und infolge der ersten Integrationszeit unterschiedliche Ausgangsspannungen haben. Dies alles ist in Figur 5c dargestellt.

Zum Ende der zweiten Integrationszeit wird auch der zweite Schalter S2 wieder geöffnet, so dass nun alle drei Schalter, der erste Schalter S1, der zweite Schalter S2 und der Reset-Schalter RS geöffnet sind. Die die jeweiligen Integratorstände reflektierenden, an den Kondensatoren C1 und C2 anliegenden Spannungen können nun, wie zuvor beschrieben, weiter verarbeitet werden, entweder indem sie direkt ausgewertet werden, oder indem diese Spannungen über mehrere Messzyklen akkumuliert werden.

Die Ausführungsvariante gemäß Figuren 6a bis 6d unterscheidet sich von der Ausführungsvariante gemäß Figuren 5a bis 5d dadurch, wie die Kondensatorspannungen während der ersten und der zweiten Integrationszeit gebildet werden.

In Figur 6b ist zu entnehmen, dass zu Beginn der ersten Integrationszeit lediglich der Reset-Schalter RS durch ein entsprechendes Integratorsteuersignal geöffnet wird. Der erste und der zweite Schalter S1 und S2 bleiben geschlossen, so dass sich nun die beiden Kondensatoren C1 und C2 gleichzeitig über die Photodiode PD infolge des durch die Photodiode fließenden Photostroms entladen können.

Zum Ende der ersten Integrationszeit und zu Beginn der zweiten Integrationszeit wird lediglich der erste Schalter S1 geöffnet, während gleichzeitig der zweite Schalter S2 geschlossen bleibt und der Reset-Schalter RS ebenfalls geöffnet bleibt; siehe Figur 6c. Dies bedeutet, dass sich der zweite Kondensator C2 weiterhin über die Photodiode PD infolge des durch die Photodiode PD fließenden, von dem jeweils auf die Photodiode PD treffenden Lichtmenge abhängigen Photostroms weiter entleert. Da die Photodiode PD und der zweite Kondensator C2 somit zu Beginn der zweiten Integrationszeit die gleiche Potentialdifferenz aufweisen, kommt es nicht zu einem Ausgleichsvorgang, der die Integration überlagert.

Zum Ende der zweiten Integrationszeit wird auch der zweite Schalter S2 durch ein entsprechendes Integratorsteuersignal geöffnet, so dass nun alle drei Schalter gleichermaßen geöffnet sind; siehe Figur 6d. Wie schon mit Bezug auf Figur 5d beschrieben, können nun die Spannungen der Kondensatoren C1 und C2 ausgelesen und ausgewertet werden oder auf weitere Kapazitäten übertragen werden, in denen dann die jeweiligen Endspannungen der Kondensatoren C1 und C2 über mehrere Messzyklen akkumuliert werden.

**Patentansprüche**

1. Vorrichtung zur Abstandsbestimmung mit

- einer Sendeeinheit (10) zum Aussenden eines Lichtimpulses mit einer vorgegebenen Impulsdauer beginnend mit einer vorderen, ansteigenden Flanke und endend mit einer hinteren, abfallenden Flanke, wobei die Sendeeinheit (10) über einen ersten Steuereingang verfügt und ausgebildet ist, bei Anliegen eines Sendestartsignals an dem ersten Steuereingang einen Lichtimpuls auszusenden,
- einer Empfängermatrix (20) mit wenigstens einem photoelektrischen Element (21), wobei die Empfängermatrix (20) einen Messausgang für ein Ausgangssignal aufweist und ausgebildet ist, ein von einem durch das photoelektrische Element in Abhängigkeit von auf das photoelektrische Element einfallendem Licht erzeugten Messsignal abgeleitetes Ausgangssignal auszugeben, wobei
- die Empfängermatrix (20) über einen zweiten Steuereingang für ein Integratorsteuersignal und einen ersten und einen zweiten Integrator (22, 23) verfügt, die mit einem einzigen oder jeweils einem photoelektrischen Element (21) und dem zweiten Steuereingang verbunden, durch das Integratorsteuersignal unabhängig voneinander aktivierbar und jeweils ausgebildet sind, das Messsignal über eine durch das Integratorsteuersignal vorgegebene Integrationszeit zu integrieren und dadurch je einen Integratorstand zu bilden und die Integratorstände als Ausgangssignal auszugeben, und
- einer Kontrolleinheit (30), die mit der Sendeeinheit (10) und der Empfängermatrix (20) verbunden und ausgebildet ist, das Sendestartsignal zu erzeugen und an die Sendeeinheit (10) auszugeben und das Ausgangssignal von der Empfängermatrix (20) entgegenzunehmen und auszuwerten, wobei
- die Kontrolleinheit (30) dazu ausgebildet ist, ein Abstandssignal anhand des Aussendens eines Lichtimpulses und der Auswertung der diesem zuzuordnenden Integratorstände der Integratoren zu bilden,
- die Kontrolleinheit (30) über einen Zeitgeber (31) verfügt, der ausgebildet ist, der Kontrolleinheit (30) das Verstreichen einer von der Kontrolleinheit (30) vorgegebenen Zeitspanne anzuzeigen und wobei
- die Kontrolleinheit (30) ausgebildet ist,

  - einen Messzyklus mit einer ersten Aktivitätszeitspanne (110) durchzuführen und dabei durch Abgabe jeweiliger zweier Integratorsteuersignale zuerst den ersten Integrator für eine der ersten Aktivitätszeitspanne (110) entsprechenden ersten Integrationszeit zu aktivieren und nach einem ersten Verstreichen der ersten Aktivitätszeitspanne (110) den ersten Integrator zu deaktivieren und den zweiten Integrator (22, 23) zu aktivieren,

- nach der Durchführung eines ersten Messzyklus' mit einer ersten Aktivitätszeitspanne (110) einen zweiten Messzyklus mit einer zweiten Aktivitätszeitspanne durchzuführen, wobei die zweite Aktivitätszeitspanne kürzer als die erste Aktivitätszeitspanne ist,

- beim Durchführen des zweiten Messzyklus' nach dem Abgeben des Sendestartsignals eine Wartezeitspanne verstreichen zu lassen und nach dem Verstreichen der Wartezeitspanne das Integratorsteuersignal zum Aktivieren des ersten Integrators abzugeben **dadurch gekennzeichnet, dass**

die Kontrolleinheit ausgebildet ist,

- anhand des Ausgangssignals der Empfängermatrix (20) des ersten Messzyklus' einen Abstand einer Region-of-Interest zur Empfängermatrix (20) zu bestimmen und die Wartezeitspanne kleiner oder gleich der Laufzeit von Licht über eine dem doppelten Abstand entsprechende Strecke zu bemessen.

2. Vorrichtung nach Anspruch 1, **dadurch gekennzeichnet, dass** das photoelektrische Element rechteckig, insbesondere quadratisch, ist und eine Seitenlänge zwischen 100 μm und 300 μm, insbesondere 200 μm, aufweist.

3. Vorrichtung nach einem der Ansprüche 1 oder 2, **dadurch gekennzeichnet, dass** die Empfängermatrix (20) eine Vielzahl von photoelektrischen Elementen (21) und für jedes photoelektrische Element einen ersten und einen zweiten Integrator (22, 23) aufweist, wobei die photoelektrischen Elemente (21) in einem zweidimensionalen Feld angeordnet sind.

4. Vorrichtung nach einem der Ansprüche 1 bis 3, **gekennzeichnet durch** eine Optik, die vor der Empfängermatrix (20) angeordnet und ausgebildet ist, Licht der von der Sendeeinheit (10) ausgesandten Art auf die Empfängermatrix (20) zu projizieren.

5. Vorrichtung nach einem der Ansprüche 1 bis 4, **dadurch gekennzeichnet, dass** die Sendeeinheit (10) ausgebildet ist, Infrarotlicht auszusenden.

6. Vorrichtung nach einem der Ansprüche 1 bis 5, **dadurch gekennzeichnet, dass** die Sendeeinheit (10) ausgebildet ist, Lichtimpulse unterschiedlicher Intensität abzugeben, wobei die Intensität durch das am ersten Steuereingang anliegende Sendestartsignal vorgebbar ist.

7. Vorrichtung nach einem der Ansprüche 1 bis 6, **dadurch gekennzeichnet, dass** die Kontrolleinheit (30) ausgebildet ist, während der Durchführung eines Messzyklus' den zweiten Integrator (22, 23) für eine ebenfalls der ersten Aktivitätszeitspanne (110) entsprechende zweite Integrationszeit zu aktivieren und nach einem zweiten, vom Zeitpunkt des ersten Verstreichens der ersten Aktivitätszeitspanne (110) gemessenen Verstreichen der ersten Aktivitätszeitspanne (110) zu deaktivieren.

8. Vorrichtung nach einem der Ansprüche 1 bis 7, **dadurch gekennzeichnet, dass** die Kontrolleinheit (30) ausgebildet ist, die Sendeeinheit (10) für die Dauer des ersten Verstreichens der ersten Aktivitätszeitspanne (110) zu aktivieren und so einen Lichtimpuls mit einer Impulsdauer auszulösen, die der ersten Aktivitätszeitspanne (110) entspricht.

9. Vorrichtung nach einem der Ansprüche 1 bis 8, **dadurch gekennzeichnet, dass** die Kontrolleinheit (30) ausgebildet ist, während der Durchführung eines Messzyklus' die Sendeeinheit (10) und den ersten Integrator durch gleichzeitiges Abgeben eines Sendestartsignals und eines Integratorsteuersignals gleichzeitig zu aktivieren.

10. Vorrichtung nach einem der Ansprüche 1 bis 9, **dadurch gekennzeichnet, dass** die Kontrolleinheit (30) ausgebildet ist, eine Vielzahl von Messzyklen durchzuführen, wobei der erste Integrator und der zweite Integrator ausgebildet sind, ihren jeweiligen Integratorstand zwischen den Messzyklen zu speichern und somit das Messsignal über die Vielzahl von Messzyklen zu integrieren, und dass die Kontrolleinheit (30) ausgebildet ist, das jeweilige vom ersten Integrator und vom zweiten Integrator (22, 23) ausgegebene Ausgangssignal nach dem Durchführen der Vielzahl von Messzyklen entgegenzunehmen und auszuwerten.

11. Vorrichtung nach einem der Ansprüche 1 bis 10, **dadurch gekennzeichnet, dass** die erste Aktivitätszeitspanne zwischen 10 und 100 ns, insbesondere 20 ns, dauert.

12. Vorrichtung nach einem der Ansprüche 1 bis 11, **dadurch gekennzeichnet, dass** die Kontrolleinheit (30) über einen A/D-Umsetzer verfügt, der ausgebildet ist, ein von der Empfängermatrix (20) entgegengenommenes Ausgangssignal in eine digitale Repräsentation umzusetzen und als Ergebniswert auszugeben.

13. Vorrichtung nach Anspruch 12, **dadurch gekennzeichnet, dass** die Kontrolleinheit (30) eine arithmetische Logikeinheit aufweist, die mit dem A/D-Umsetzer verbunden und ausgebildet ist, einen vom A/D-Umsetzer umgesetzten vom ersten Integrator ausgegebenen ersten Ergebniswert und einen vom A/D-Umsetzer umgesetzten vom zweiten Integrator (22, 23) ausgegebenen zweiten Ergebniswert gemäß einer vorbestimmten Rechenvorschrift miteinander zu verknüpfen und das Rechenergebnis auszugeben.

14. Vorrichtung nach Anspruch 13, **dadurch gekennzeichnet, dass** die Rechenvorschrift

$$ s = \frac{cT}{4}\left(1 + \frac{A_2 - A_1}{A_1 + A_2}\right) $$ ist, wobei s das Rechenergebnis, c die Lichtgeschwindigkeit, T die erste Aktivitätszeitspanne, $A_1$ der vom A/D-Umsetzer umgesetzte erste Ergebniswert und $A_2$ der vom A/D-Umsetzer umgesetzte zweite Ergebniswert sind.

15. Vorrichtung nach einem der Ansprüche 1 bis 14, **dadurch gekennzeichnet, dass** die Sendeeinheit (10) ausgebildet ist, Lichtimpulse unterschiedlicher Impulsdauer auszusenden, wobei die Impulsdauer von der Kontrolleinheit (30) durch das Sendestartsignal vorgebbar ist, und dass die Kontrolleinheit (30) ausgebildet ist, den ersten Messzyklus' mit einem Lichtimpuls einer ersten Impulsdauer und einer ersten Intensität und den zweiten Messzyklus mit einem Lichtimpuls einer zweiten Impulsdauer und einer zweiten Intensität durchzuführen, wobei die erste Impulsdauer größer als die zweite Impulsdauer und die erste Intensität geringer als die zweite Intensität sind.

16. Vorrichtung nach einem der Ansprüche 1 bis 15, bei der die zweite Aktivitätszeitspanne gleich der ersten Aktivitätszeitspanne (110) abzüglich der Wartezeitspanne ist.

17. Vorrichtung nach Anspruch 16, bei der die zweite Dauer gleich der zweiten Aktivitätszeitspanne ist.

18. Vorrichtung nach einem der Ansprüche 1 bis 17, **gekennzeichnet durch** einen Bildsensor, der ausgebildet ist, einen auf den Bildsensor projizierten Bildbereich in einem zweidimensionalen Bild, insbesondere einem zweidimensionalen Farbbild, zu erfassen, und so angeordnet ist, dass sich der von dem Bildsensor erfasste Bildbereich und ein von der Empfängermatrix (20) erfasster Bildbereich wenigstens in einem Teilbereich überschneiden, wobei die Kontrolleinheit (30) ausgebildet ist, das zweidimensionale Bild und das ausgewertete Ausgangssignal in dem Teilbereich zu einem dreidimensionalen Bild zu verknüpfen, so dass das dreidimensionale Bild zu jedem Bildpunkt einen Abstandswert aufweist.

19. Vorrichtung nach Anspruch 18, **dadurch gekennzeichnet, dass** der Bildsensor eine höhere Auflösung aufweist als die Empfängermatrix (20).

20. Vorrichtung nach einem der Ansprüche 1 bis 19, **dadurch gekennzeichnet, dass** das der erste und der zweite Integrator jeweils eine Kapazität (C1, C2) aufweisen, die über jeweils einen Schalter (S1, S2) zu dem photoelektrischen Element (21, PD) parallel zu schalten sind, wobei die Schalter (S1, S2) durch Integratorsteuersignale der Kontrolleinheit (30) unabhängig voneinander zu öffnen und zu schließen sind.

21. Vorrichtung nach Anspruch 20, **dadurch gekennzeichnet, dass** das photoelektrische Element eine Photodiode (PD) ist.

22. Vorrichtung nach Anspruch 20 oder 21, **dadurch gekennzeichnet, dass** die erste und der zweite Kapazität über einen Resetschalter auf die gleiche Ausgangsspannung zu laden sind.

23. Verfahren zur Abstandsbestimmung mit den Schritten:

  - Aussenden eines Lichtimpulses einer vorbestimmbaren Impulsdauer (100),
  - Integrieren eines Photostromes eines photoelektrischen Elementes (21) während eines ersten Verstreichens einer ersten Aktivitätszeitspanne (110),
  - Ausgeben eines ersten Ausgangssignals,
  - Integrieren des Photostromes des photoelektrischen Elementes (21) während eines zweiten Verstreichens der ersten Aktivitätszeitspanne (110), das sich direkt an das erste Verstreichen der ersten Aktivitätszeitspanne anschließt (120),
  - Ausgeben eines zweiten Ausgangssignals (130),
  - Bestimmen einer Signallaufzeit des Lichtimpulses durch Auswerten des ersten und des zweiten Ausgangssignals (130),

  wobei

  - zwei Messzyklen durchgeführt werden, wobei beim ersten Messzyklus' die Schritte des Aussendens des Lichtimpulses und des Integrierens des Photostromes während des ersten Verstreichens der ersten Aktivitätszeitspanne (110) gleichzeitig ausgeführt werden und beim zweiten Messzyklus zwischen dem Beginn des Schrittes des Aussendens des Lichtimpulses und dem Beginn des Schrittes des Integrierens eine Wartezeitspanne verstreichen gelassen wird (160),

**dadurch gekennzeichnet, dass**

- die Wartezeitspanne durch Auswerten des Ausgangssignals des ersten Messzyklus' hinsichtlich eines Abstands zu einer Region-of-Interest bestimmt wird (140), wobei die Wartezeitspanne kleiner oder gleich der Laufzeit von Licht über eine dem doppelten Abstand zu der Region-of-Interest entsprechende Strecke bemessen wird.

24. Verfahren nach Anspruch 23, bei dem die erste Aktivitätszeitspanne gleich der vorbestimmbaren Impulsdauer (100) des Lichtimpulses ist.

25. Verfahren nach einem der Ansprüche 23 oder 24, bei dem im Schritt des Aussendens des Lichtimpulses die Intensität des Lichtimpulses vorgebbar ist.

26. Verfahren nach einem der Ansprüche 23 bis 25, bei dem die Schritte des Aussendens des Lichtimpulses, des Integrierens des Photostromes während des ersten Verstreichens der ersten Aktivitätszeitspanne (110) und des Integrierens des Photostromes während des zweiten Verstreichens der ersten Aktivitätszeitspanne (110) vor den Schritten des Ausgebens des ersten Ausgangssignals und des Ausgebens des zweiten Ausgangssignals (130) mehrfach durchgeführt werden.

27. Verfahren nach einem der Ansprüche 23 bis 26, bei dem im ersten Messzyklus' im Schritt des Aussendens des Lichtimpulses ein Lichtimpuls mit einer ersten Impulsdauer und einer ersten Intensität und im zweiten Messzyklus im Schritt des Aussendens des Lichtimpulses ein Lichtimpuls mit einer zweiten Impulsdauer und einer zweiten Intensität ausgesendet werden, wobei die erste Impulsdauer größer als die zweite Impulsdauer und die erste Intensität niedriger als die zweite Intensität sind.

28. Verfahren nach einem der Ansprüche 23 bis 27, bei dem das erste ausgegebene Ausgangssignal und das zweite ausgegebene Ausgangssignal gemäß einer vorbestimmten Rechenvorschrift miteinander verknüpft werden, wobei das Ergebnis der vorbestimmten Rechenvorschrift einen Abstand bezeichnet.

29. Verfahren nach einem der Ansprüche 23 bis 28, bei dem ein Schritt des Aufnehmens eines zweidimensionalen Bildes, insbesondere eines Farbbildes, und ein Schritt des Verknüpfens des zweidimensionalen Bildes und der ausgewerteten Ausgangssignale zu einem dreidimensionalen Bild vorgenommen werden, wobei das dreidimensionale Bild zu jedem Bildpunkt einen Abstandswert aufweist.

**Claims**

1. Device for distance determination with

- a sender unit (10) for sending a light pulse with a predetermined pulse duration starting with a front, increasing flank and ending with a rear, decreasing flank, wherein the sender unit (10) has a first control input and is designed for sending a light pulse when a sending start signal is applied to the first control input,
- a receiver matrix (20) with at least one photoelectric element (21), wherein the receiver matrix (20) has a measuring output for an output signal and is designed for issuing an output signal derived from a measurement signal generated by the photoelectric element depending on the light falling onto the photoelectric element, wherein
- the receiver matrix (20) has a second control input for an integrator control signal and a first and a second integrator (22, 23), connected with a single or one photoelectric element (21) each and the second control input, activatable via the integrator control signal independently of each other, and each designed for integrating the measurement signal over an integration period stipulated by the integrator control signal and therefore generating an integrator condition each and issuing the integrator conditions as an output signal, and
- a control unit (30) connected with the sender unit (10) and the receiver matrix (20) and designed for generating the sending start signal and issuing the same to the sender unit (10), and for receiving the output signal from the receiver matrix (20) and evaluating the same, wherein
- the control unit (30) is designed for forming a distance signal by sending a light pulse and evaluating the integrator conditions of the integrators allocated to the same,
- the control unit (30) has a timer (31) designed to indicate the expiry of a time period stipulated by the control unit (30) to the control unit (30), and wherein
- the control unit (30) is designed to
- complete a measuring cycle with a first activity period (110) and firstly activate the first integrator for a first integration period equalling the first activity period (110) by issuing two respective integrator control signals, and for deactivating the first integrator after expiry of the first activity period (110) and activating the second integrator (22, 23),
- complete a second measuring cycle with a second activity period after completing a first measuring cycle with a first activity period (110), wherein the second activity period is shorter than the first activity period,
- let a waiting period elapse whilst completing the second measuring cycle after issuing the sending start signal, and to issue the integrator control signal for activating the first integrator after expiry of the waiting period, **characterised in that**

the control unit is designed to

- determine a distance of a region of interest from the receiver matrix (20) with the aid of the output signal of the receiver matrix (20) of the first measuring cycle, and calculate the waiting period smaller or equal to the period of light across a path equalling double the distance.

2. Device according to claim 1, **characterised in that** the photoelectric element is rectangular, in particular square, and has a side length of between 100 μm and 300 μm, in particular 200 μm.

3. Device according to one of the claims 1 or 2, **characterised in that** the receiver matrix (20) has a multitude of photoelectric elements (21) and a first and a second integrator (22, 23) for each photoelectric element, wherein the photoelectric elements (21) are arranged in a two-dimensional field.

4. Device according to one of the claims 1 to 3, **characterised by** a lens arranged before the receiver matrix (20) and designed for projecting light of the type emitted by the sender unit (10) onto the receiver matrix (20).

5. Device according to one of the claims 1 to 4, **characterised in that** the sender unit (10) is designed to emit infrared light.

6. Device according to one of the claims 1 to 5, **characterised in that** the sender unit (10) is designed to emit light pulses of varying intensity, wherein the intensity can be stipulated by the sending start signal applied to the first control input.

7. Device according to one of the claims 1 to 6, **characterised in that** the control unit (30) is designed to activate the second integrator (22, 23) for a second integration period that also equals the first activity period (110) whilst completing a measuring cycle and to deactivate the same after a second expiry of the first activity period (110), measured from the time of the first expiry of the first activity period (110).

8. Device according to one of the claims 1 to 7, **characterised in that** the control unit (30) is designed to activate the sender unit (10) for the duration of the first expiry of the first activity period (110) and to trigger a light pulse in this way, which equals the first activity period (110).

9. Device according to one of the claims 1 to 8, **characterised in that** the control unit (30) is designed to simultaneously activate the sender unit (10) whilst completing a measuring cycle and the first integrator through simultaneous emission of a sensing start signal and an integrator control signal.

10. Device according to one of the claims 1 to 9, **characterised in that** the control unit (30) is designed to complete a multitude of measuring cycles, wherein the first integrator and the second integrator are designed to store their respective integrator condition between the measuring cycles and thus to integrate the measurement signal across a multitude of measuring cycles, and that the control unit (30) is designed to receive the respective starting signal emitted by the first integrator and by the second integrator (22, 23) after completing the multitude of measuring cycles and evaluate the same.

11. Device according to one of the claims 1 to 10, **characterised in that** the first activity period lasts between 10 and 100 ns, in particular 20 ns.

12. Device according to one of the claims 1 to 11, **characterised in that** the control unit (30) has an A/D transducer, designed for converting an output signal received from the receiver matrix (20) into a digital representation and issue the same as a result value.

13. Device according to claim 12, **characterised in that** the control unit (30) has an arithmetic logic unit that is connected with the A/D transducer and is designed to link a first result value emitted by the first integrator and converted by the A/D transducer with a second result value emitted by the second integrator (22, 23) and converted by the A/D transducer with each other according to a predetermined calculation rule and to issue the calculation result.

14. Device according to claim 13, **characterised in that** the calculation rule is $s = \dfrac{cT}{4}\left(1 + \dfrac{A_2 - A_1}{A_1 + A_2}\right)$,

wherein $s$ is the calculation result, $c$ the light speed, $T$ the first activity period, $A_1$ the first result value converted by the A/D transducer and $A_2$ the second result value converted by the A/D transducer.

15. Device according to one of the claims 1 to 14, **characterised in that** the sender unit (10) is designed to emit light pulses of different pulse durations, wherein the pulse duration can be stipulated by the control unit (30) by means of the sending start signal, and **in that** the control unit (30) is designed for completing the first measuring cycle with a light pulse of a first pulse duration and a first intensity, and the second measuring cycle with a light pulse of a second pulse duration and a second intensity, wherein the first pulse duration is greater than the second pulse duration and the first intensity lower than the second intensity.

16. Device according to one of the claims 1 to 15, where the second activity period equals the first activity period (110) minus the waiting period.

17. Device according to claim 16, where the second duration equals the second activity period.

18. Device according to one of the claims 1 to 17, **characterised by** an image sensor, designed for recording an image area projected onto the image sensor in a two-dimensional image, in particular a two-dimensional colour image, and arranged in such a way that the image area recorded by the image sensor and an image area recorded by the receiver matrix (20) overlap in at least a part area, wherein the control unit (30) is designed to link the two-dimensional image and the evaluated output signal in the part area to form a three-dimensional image, so that the three-dimensional image has a distance value for every image point.

19. Device according to claim 18, **characterised in that** the image sensor has a higher resolution than the receiver matrix (20).

20. Device according to one of the claims 1 to 19, **characterised in that** the first and the second integrator each have a capacity (C1, C2) that can be switched parallel to the photoelectric element (21, PD) via one switch (S1, S2) respectively, wherein the switches (S1, S2) can be opened and closed independently from each other with integrator signals from the control unit (30).

21. Device according to claim 20, **characterised in that** the photoelectric element is a photodiode (PD).

22. Device according to claims 20 to 21, **characterised in that** the first and the second capacity can be charged to the same output voltage via a reset switch.

23. Method for distance determination with the steps:

    - sending a light pulse of a predetermined pulse duration (100);
    - integrating a photocurrent of a photoelectric element (21) during a first expiry of a first activity period (110),
    - issuing a first output signal,
    - integrating the photocurrent of the photoelectric element (21) during a second expiry of the first activity period (110), which directly follows the first expiry of the first activity period (120),
    - issuing a second output signal (130),
    - determining a signal period of the light pulse by evaluating the first and the second output signal (130),

    wherein

    - two measuring cycles are completed, wherein the steps of sending the light pulse and of integrating the photocurrent are completed simultaneously during the expiry of the first activity period (110) during the first measuring cycle, and a waiting period is allowed to expire between the start of the step of sending the light pulse and the start of the step of integrating during the second measuring cycle (160),

    **characterised in that**

    - the waiting period is determined through evaluating the output signal of the first measuring cycle with regard to a distance from a region of interest (140), wherein the waiting period is smaller or equal to the period of light across a path equalling double the distance from the period of interest.

24. Method according to claim 23, where the first activity period equals the predeterminable pulse duration (100) of the light pulse.

25. Method according to one of the claims 23 or 24, where the intensity of the light pulse is predeterminable during the step of sending the light pulse.

26. Method according to one of the claims 23 to 25, where integrating the photocurrent during the first expiry of the first activity period (110) and integrating the photocurrent during the second expiry of the first activity period (110) is completed several times during the step of sending the light pulse prior to the steps of issuing the first output signal and issuing the second output signal (130).

27. Method according to one of the claims 23 to 26, where a light pulse with a first pulse period and a first intensity is sent during the first measuring cycle, and a light pulse with a second pulse period and a second intensity during the second measuring cycle of the step of issuing the light pulse during the step of sending the light pulse, wherein the first pulse period is greater than the second pulse period and the first intensity is lower than the second intensity.

**28.** Method according to one of the claims 23 to 27, where the first output signal issued and the second output signal issued are linked with each other according to a predetermined calculation rule, wherein the result of the predetermined calculation rule denotes a distance.

**29.** Method according to one of the claims 23 to 28, where a step of recording a two-dimensional image, in particular a colour image, and a step of linking the two-dimensional image and the evaluated output signals to form a three-dimensional image is completed, wherein the three-dimensional image has a distance value for every image point.

**Revendications**

**1.** Dispositif de détermination de distance, comprenant

- une unité d'émission (10) destinée à émettre une impulsion lumineuse ayant une durée d'impulsion prédéfinie et commençant par un front avant montant et se terminant par un front arrière descendant, l'unité d'émission (10) disposant d'une première entrée de commande et étant configurée pour, en présence d'un signal de début d'émission sur la première entrée de commande, émettre une impulsion lumineuse,
- une matrice de récepteurs (20) comprenant au moins un élément photoélectrique (21), la matrice de récepteurs (20) possédant une sortie de mesure pour un signal de sortie et étant configurée pour délivrer un signal de sortie dérivé d'un signal de mesure généré par l'élément photoélectrique en fonction de la lumière incidente sur l'élément photoélectrique,
- la matrice de récepteurs (20) disposant d'une deuxième entrée de commande pour un signal de commande d'intégrateur ainsi que d'un premier et d'un deuxième intégrateur (22, 23) qui sont reliés à un élément photoélectrique (21) unique ou à un élément photoélectrique respectif et à la deuxième entrée de commande, peuvent être activés indépendamment l'un de l'autre par le signal de commande d'intégrateur et sont respectivement configurés pour intégrer le signal de mesure sur un temps d'intégration prédéfini par le signal de commande d'intégrateur et former ainsi respectivement un état d'intégrateur et délivrer les états d'intégrateur sous la forme d'un signal de sortie, et
- une unité de contrôle (30) qui est reliée à l'unité d'émission (10) et à la matrice de récepteurs (20) et qui est configurée pour générer le signal de départ d'émission et le délivrer à l'unité d'émission (10) et pour réceptionner le signal de sortie de la matrice de récepteurs (20) et l'interpréter,
- l'unité de contrôle (30) étant configurée pour former un signal de distance au moyen de l'émission d'une impulsion lumineuse et de l'interprétation des états de l'intégrateur qui sont associés à celle-ci,
- l'unité de contrôle (30) disposant d'un générateur d'horloge (31) qui est configuré pour indiquer à l'unité de contrôle (30) l'écoulement d'un intervalle de temps prédéfini par l'unité de contrôle (30) et
- l'unité de contrôle (30) étant configurée pour

- exécuter un cycle de mesure avec un premier intervalle de temps d'activité (110) et activer ici tout d'abord le premier intégrateur pendant le premier intervalle de temps d'activité (110) conformément à un premier temps d'intégration en délivrant respectivement deux signaux de commande d'intégrateur et, après un premier écoulement du premier intervalle de temps d'activité (110), désactiver le premier intégrateur et activer le deuxième intégrateur (22, 23),
- après l'exécution d'un premier cycle de mesure avec le premier intervalle de temps d'activité (110), exécuter un deuxième cycle de mesure avec un deuxième intervalle de temps d'activité, le deuxième intervalle de temps d'activité étant plus court que le premier intervalle de temps d'activité,
- lors de l'exécution du deuxième cycle de mesure, après la délivrance du signal de début d'émission, laisser s'écouler un intervalle de temps d'attente et, après l'écoulement de l'intervalle de temps d'attente, délivrer le signal de commande d'intégrateur pour activer le premier intégrateur,

**caractérisé en ce que**
l'unité de commande est configurée pour

- au moyen du signal de sortie de la matrice de récepteurs (20) du premier cycle de mesure, déterminer une distance entre une région d'intérêt et la matrice de récepteurs (20) et dimensionner l'intervalle de temps d'attente inférieur ou égal au temps de propagation de la lumière sur un segment correspondant au double de la distance.

**2.** Dispositif selon la revendication 1, **caractérisé en ce que** l'élément photoélectrique est rectangulaire, notamment carré, et possède une longueur de côté comprise entre 100 μm et 300 μm, notamment égale à 200 μm.

**3.** Dispositif selon l'une des revendications 1 ou 2, **caractérisé en ce que** la matrice de récepteurs (20) possède une pluralité d'éléments photoélectriques (21) et un premier et un deuxième intégrateur (22, 23) pour chaque élément photoélectrique, les éléments photoélectriques (21) étant disposés dans un champ bidirectionnel.

**4.** Dispositif selon l'une des revendications 1 à 3, **caractérisé par** une optique qui est disposée devant la matrice de récepteurs (20) et configurée pour projeter la lumière du type émis par l'unité d'émission (10) sur la matrice de récepteurs (20).

**5.** Dispositif selon l'une des revendications 1 à 4, **caractérisé en ce que** l'unité d'émission (10) est configurée pour émettre de la lumière infrarouge.

**6.** Dispositif selon l'une des revendications 1 à 5, **caractérisé en ce que** l'unité d'émission (10) est configurée pour délivrer des impulsions lumineuses de différentes intensités, l'intensité pouvant être prédéfinie par le signal de début d'émission appliqué à la première entrée de commande.

**7.** Dispositif selon l'une des revendications 1 à 6, **caractérisé en ce que** l'unité de contrôle (30) est configurée pour activer le deuxième intégrateur (22, 23) pendant l'exécution d'un cycle de mesure pendant un deuxième temps d'intégration correspondant également au premier intervalle de temps d'activité (110) et le désactiver après un deuxième écoulement du premier intervalle de temps d'activité (110), mesuré à partir du moment du premier écoulement du premier intervalle de temps d'activité (110).

**8.** Dispositif selon l'une des revendications 1 à 7, **caractérisé en ce que** l'unité de contrôle (30) est configurée pour activer l'unité d'émission (10) pendant la durée du premier écoulement du premier intervalle de temps d'activité (110) et déclencher ainsi avec une durée d'impulsion une impulsion lumineuse qui correspond au premier intervalle de temps d'activité (110).

**9.** Dispositif selon l'une des revendications 1 à 8, **caractérisé en ce que** l'unité de contrôle (30) est configurée pour activer simultanément l'unité d'émission (10) et le premier intégrateur pendant l'exécution d'un cycle de mesure en délivrant simultanément un signal de début d'émission et un signal de commande d'intégrateur.

**10.** Dispositif selon l'une des revendications 1 à 9, **caractérisé en ce que** l'unité de contrôle (30) est configurée pour exécuter une pluralité de cycles de mesure, le premier intégrateur et le deuxième intégrateur étant configurés pour mémoriser leur état d'intégrateur correspondant entre les cycles de mesure et intégrer ainsi le signal de mesure sur la pluralité de cycles de mesure, et **en ce que** l'unité de contrôle (30) est configurée pour réceptionner le signal de sortie respectivement délivré par le premier intégrateur et le deuxième intégrateur (22, 23) après l'exécution de la pluralité de cycles de mesure et l'interpréter.

**11.** Dispositif selon l'une des revendications 1 à 10, **caractérisé en ce que** le premier intervalle de temps d'activité a une durée comprise entre 10 ns et 100 ns, notamment égale à 20 ns.

**12.** Dispositif selon l'une des revendications 1 à 11, **caractérisé en ce que** l'unité de contrôle (30) dispose d'un convertisseur A/N qui est configuré pour convertir en une représentation numérique un signal de sortie réceptionné par la matrice de récepteurs (20) et le délivrer sous la forme d'une valeur de résultat.

**13.** Dispositif selon la revendication 12, **caractérisé en ce que** l'unité de contrôle (30) possède une unité logique arithmétique qui est reliée au convertisseur A/N et configurée pour combiner entre elles une première valeur de résultat, convertie par le convertisseur A/N et délivrée par le premier intégrateur, et une deuxième valeur de résultat, convertie par le convertisseur A/N et délivrée par le deuxième intégrateur (22, 23), conformément à une règle de calcul prédéfinie et pour délivrer le résultat du calcul.

**14.** Dispositif selon la revendication 13, **caractérisé en ce que** la règle de calcul est

$$s = \frac{cT}{4}\left(1 + \frac{A_2 - A_1}{A_1 + A_2}\right),$$ s désignant le résultat du calcul, c la vitesse de la lumière, T le premier intervalle de temps d'activité, $A_1$ la première valeur de résultat convertie par le convertisseur A/N et $A_2$ la deuxième valeur de résultat convertie par le convertisseur A/N.

**15.** Dispositif selon l'une des revendications 1 à 14, **caractérisé en ce que** l'unité d'émission (10) est configurée pour émettre des impulsions lumineuses de différentes durées d'impulsion, la durée d'impulsion pouvant être prédéfinie par l'unité de contrôle (30) par le signal de début d'émission, et **en ce que** l'unité de contrôle (30) est configurée pour exécuter le premier cycle de mesure avec une impulsion lumineuse ayant une première durée d'impulsion et une première intensité et le deuxième cycle de mesure avec une impulsion lumineuse ayant une deuxième durée d'impulsion et une deuxième intensité, la première durée d'impulsion étant supérieure à la deuxième durée d'impulsion et la première intensité inférieure à la deuxième intensité.

**16.** Dispositif selon l'une des revendications 1 à 15, avec lequel le deuxième intervalle de temps d'activité est égal au premier intervalle de temps d'activité (110) moins l'intervalle de temps d'attente.

**17.** Dispositif selon la revendication 16, avec lequel la deuxième durée est égale au deuxième intervalle de temps d'activité.

**18.** Dispositif selon l'une des revendications 1 à 17, **caractérisé par** un capteur d'image qui est configuré pour capturer une zone d'image projetée sur le capteur d'image dans une image bidimensionnelle, notamment une image en couleur bidimensionnelle, et disposé de telle sorte que la zone d'image capturée par le capteur d'image et une zone d'image capturée par la matrice de récepteurs (20) se recoupent au moins dans une zone partielle, l'unité de contrôle (30) étant configurée pour combiner l'image bidimensionnelle et le signal de sortie interprété dans la zone partielle en une image tridimensionnelle, de sorte que l'image tridimensionnelle possède une valeur de distance pour chaque pixel.

**19.** Dispositif selon la revendication 18, **caractérisé en ce que** le capteur d'image possède une résolution supérieure à celle de la matrice de récepteurs (20).

**20.** Dispositif selon l'une des revendications 1 à 19, **caractérisé en ce que** le premier et le deuxième intégrateur possèdent respectivement un condensateur (C1, C2) qui peuvent être branchés en parallèle avec l'élément photoélectrique (21, PD) respectivement par le biais d'un commutateur (S1, S2), les commutateurs (S1, S2) pouvant être ouverts et fermés indépendamment l'un de l'autre par les signaux d'intégrateur de l'unité de contrôle (30).

**21.** Dispositif selon la revendication 20, **caractérisé en ce que** l'élément photoélectrique est une photodiode (PD).

**22.** Dispositif selon la revendication 20 ou 21, **caractérisé en ce que** le premier et le deuxième condensateur peuvent être chargés à la même tension initiale par le biais d'un commutateur de réinitialisation.

**23.** Procédé de détermination de distance, comprenant les étapes suivantes

- émission d'une impulsion lumineuse ayant une durée d'impulsion prédéfinie (100),
- intégration d'un courant photoélectrique d'un élément photoélectrique (21) pendant un premier écoulement d'un premier intervalle de temps d'activité (110),
- délivrance d'un premier signal de sortie,
- intégration du courant photoélectrique de l'élément photoélectrique (21) pendant un deuxième écoulement d'un premier intervalle de temps d'activité (110) qui se rattache directement au premier écoulement du premier intervalle de temps d'activité (120),
- délivrance d'un deuxième signal de sortie (130),
- détermination d'un temps de propagation de signal de l'impulsion lumineuse en interprétant le premier et le deuxième signal de sortie (130),
- deux cycles de mesure étant exécutés, les étapes d'émission de l'impulsion lumineuse et d'intégration du courant photoélectrique pendant le premier écoulement du premier intervalle de temps d'activité (110) étant exécutées simultanément lors du premier cycle de mesure et, lors du deuxième cycle de mesure, un intervalle de temps d'attente étant laissé s'écouler entre le début de l'étape d'émission de l'impulsion lumineuse et le début de l'étape d'intégration (160),

**caractérisé en ce que**

- l'intervalle de temps d'attente est déterminé par interprétation du signal de sortie du premier cycle de mesure du point de vue d'une distance par rapport à une région d'intérêt (140), l'intervalle de temps d'attente étant dimensionné inférieur ou égal au temps de propagation de la lumière sur un segment correspondant au double de la distance par rapport à la région d'intérêt.

**24.** Procédé selon la revendication 23, avec lequel le premier intervalle de temps d'activité est égal à la durée d'impulsion (100) pouvant être prédéfinie de l'impulsion lumineuse.

**25.** Procédé selon l'une des revendications 23 ou 24, avec lequel l'intensité de l'impulsion lumineuse peut être prédéfinie dans l'étape d'émission de l'impulsion lumineuse.

**26.** Procédé selon l'une des revendications 23 à 25, avec lequel les étapes d'émission de l'impulsion lumineuse, d'intégration du courant photoélectrique pendant le premier écoulement du premier intervalle de temps d'activité (110) et d'intégration du courant photoélectrique pendant le deuxième écoulement du premier intervalle de temps d'activité (110) sont exécutées plusieurs fois avant les étapes de délivrance du premier signal de sortie et de délivrance du deuxième signal de sortie (130).

**27.** Procédé selon l'une des revendications 23 à 26, avec lequel une impulsion lumineuse ayant une première durée d'impulsion et une première intensité est émise dans le premier cycle de mesure lors de l'étape d'émission de l'impulsion lumineuse, et une impulsion lumineuse ayant une deuxième durée d'impulsion et une deuxième intensité est émise dans le deuxième cycle de mesure lors de l'étape d'émission de l'impulsion lumineuse, la première durée d'impulsion étant supérieure à la deuxième durée d'impulsion et la première intensité inférieure à la deuxième intensité.

28. Procédé selon l'une des revendications 23 à 27, avec lequel le premier signal de sortie délivré et le deuxième signal de sortie délivré sont combinés entre eux conformément à une règle de calcul prédéfinie, le résultat de la règle de calcul prédéfinie désignant une distance.

29. Procédé selon l'une des revendications 23 à 28, avec lequel sont exécutées une étape d'enregistrement d'une image bidimensionnelle, notamment d'une image en couleur, et une étape de combinaison de l'image bidimensionnelle et des signaux de sortie interprétés en une image tridimensionnelle, l'image tridimensionnelle possédant une valeur de distance pour chaque pixel.

FIG. 1

EP 1 884 797 B1

Aussenden eines Lichtimpulses erster Intensität und erster Dauer —100

x 50

Integrieren während ersten Verstreichens der ersten Aktivitätszeitspanne —110

Integrieren während zweiten Verstreichens der ersten Aktivitätszeitspanne —120

erstes Auswerten des ersten und des zweiten Ausgangsmesssignals —130

Bestimmen einer Region-of-Interest —140

Aussenden eines Lichtimpulses zweiter Intensität und zweiter Dauer —150

Verstreichenlassen einer Wartezeitspanne —160

x 50

Integrieren während ersten Verstreichens der zweiten Aktivitätszeitspanne —170

Integrieren während zweiten Verstreichens der zweiten Aktivitätszeitspanne —180

zweites Auswerten des ersten und des zweiten Ausgangsmesssignals —190

Aufnehmen eines zweidimensionalen Bildes —200

Verknüpfen zu einem dreidimensionalen Bild —210

# FIG. 2

FIG. 3

**Fig. 4**

## Fig. 5

a)

b)

c)

d)

EP 1 884 797 B1

**Fig. 6**

27

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9934235 A
- DE 10253437 A1
- DE 10153742

**In der Beschreibung aufgeführte Nicht-Patentliteratur**

- **RYOHEI MIYAGAWA et al.** CCD-Based Range-Finding Sensor. *IEEE TRANS-ACTIONS ON ELECTRON DEVICES,* 10. Oktober 1997, vol. 44, ISSN 0018-9383